# EUROPEAN PATENT APPLICATION

(11) **EP 4 845 232 A1**
(43) Date of publication of application: **25.11.2026**
(21) Application number: 25751082.6
(22) Date of filing: 13.01.2025
(51) Int. Cl.: H04W 48/16

(54) **COMMUNICATION METHOD AND APPARATUS**

(30) Priority: 08.02.2024 CN 202410178289
(71) Applicant: Huawei Technologies Co., Ltd., Shenzhen, Guangdong 518129 (CN)
(72) Inventor: XU, Shengfeng, Shenzhen, Guangdong 518129 (CN)
(74) Representative: Gill Jennings & Every LLP
(86) International application number: PCT/CN2025/072152
(87) International publication number: WO 2025/167480

(57) **Abstract**

This application relates to the field of communication technologies, and provides a communication method and apparatus. The method includes: sending a first message, where the first message is for requesting a first terminal and a second terminal to perform DualSteer; receiving a second message, where the second message includes first information, and the first information indicates that the first terminal and the second terminal are allowed to perform DualSteer; and performing DualSteer based on the first information. In this application, a first device requests, from a network, the first terminal and the second terminal to perform DualSteer. The first device performs DualSteer only after receiving the first information, that is, only when the first terminal and the second terminal are allowed to perform DualSteer. In this way, it may be determined that DualSteer can be performed.

## Description

### CROSS-REFERENCE TO RELATED APPLICATIONS

This application claims priority to Chinese Patent Application No. 202410178289.X, filed with the China National Intellectual Property Administration on February 8, 2024 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

With the development of communication technologies, a future mobile communication device may include two user equipment (user equipment, UE) devices or two universal subscriber identity modules (universal subscriber identity modules, USIMs). The mobile communication device may separately create sessions through the two UEs (or two USIMs) to connect to two radio access networks (radio access networks, RANs), and transmit service data through the two RANs. The mobile communication device may perform DualSteer. To be specific, the service data of the mobile communication device may be steered to one UE for transmission, or may be switched from one UE to another UE for transmission. Related technologies do not describe how to determine whether the mobile communication device can perform DualSteer.

### SUMMARY

This application provides a communication method and apparatus, to determine that DualSteer may be performed based on two UEs.

According to a first aspect, this application provides a communication method. The method may be performed by a first device, and the first device includes a first terminal and a second terminal. The first terminal (or the second terminal) may be a terminal, or may be a component (for example, a processor, a chip, or a chip system) in a terminal, or may be a logic module or software that implements all or a part of functions of a terminal. This is not specifically limited herein in this application.

The method may be applied to a 5G communication system or a communication system above 5G, or may be applied to a non-terrestrial communication system. This is not specifically limited in this application. The following steps are performed:
sending a first message, where the first message is for requesting the first terminal and the second terminal to perform DualSteer; receiving a second message, where the second message includes first information, and the first information indicates that the first terminal and the second terminal are allowed to perform DualSteer; and performing DualSteer based on the first information.

In this application, the first device requests, from a network, the first terminal and the second terminal to perform DualSteer. The first device performs DualSteer only after receiving the first information, that is, only when the network (for example, a unified data management function) allows the first terminal and the second terminal to perform DualSteer. In this way, it may be determined that the first device is allowed to perform DualSteer.

In an optional implementation, the first device performs DualSteer based on serving network capability information and the first information, where the serving network capability information includes a serving network of the first terminal supporting DualSteer and/or a serving network of the second terminal supporting DualSteer.

Based on this, whether the network allows the first terminal and the second terminal to perform DualSteer needs to be considered, and whether the serving network of the first terminal supports DualSteer and whether the serving network of the second terminal supports DualSteer also need to be considered, so that the first device can determine that DualSteer can be performed.

In an optional implementation, the first terminal of the first device receives second information from a first network element, where the second information indicates that the serving network of the first terminal supports DualSteer, and the first network element is configured to perform access management of the first terminal; and/or the second terminal of the first device receives third information from a second network element, where the third information indicates that the serving network of the second terminal supports DualSteer, and the second network element is configured to perform access management of the second terminal.

Based on this, the first terminal of the first device may learn, based on the second information, that the serving network of the first terminal supports DualSteer, and the second terminal of the first device may learn, based on the third information, that the serving network of the second terminal supports DualSteer, so that the first device can learn whether the network supports DualSteer.

In an optional implementation, the first message is sent by the first terminal, and the first message includes a first identity of the second terminal.

In this application, the first message includes the first identity of the second terminal, so that a network element on a core network side determines that the request is a DualSteer request for the first terminal and the second terminal.

In an optional implementation, the first message is sent by the first terminal; the first message includes a DualSteer identifier; the DualSteer identifier is generated by the first device, or the DualSteer identifier is generated by a third network element; the third network element is configured to manage data information of the second terminal; and the DualSteer identifier is associated with the second terminal.

In this application, the first message includes the DualSteer identifier associated with the second terminal, so that a network element on a core network side determines that the request is a DualSteer request for the first terminal and the second terminal. In addition, this avoids using a first identity of the second terminal, thereby helping protect information about the second terminal.

In an optional implementation, that the first message includes the DualSteer identifier includes: The first message includes a DualSteer request container, and the DualSteer request container includes the DualSteer identifier.

In this application, the first message includes the DualSteer identifier, the DualSteer identifier may be included in the DualSteer request container. In this way, security of DualSteer identifier information can be ensured. In addition, forwarding by the first network element is facilitated, and no additional processing is required.

In an optional implementation, the first message includes first indication information, and the first indication information is for requesting the first terminal and the second terminal to perform DualSteer.

In this application, when the first message includes the first indication information, the network element on the core network side may directly determine, based on the first indication information, that the first device requests the first terminal and the second terminal to perform DualSteer.

In an optional implementation, the DualSteer identifier is generated by the third network element, and the first device further receives the DualSteer identifier from the third network element.

In this application, the first device receives the DualSteer identifier from the third network element, and the first device does not need to generate the DualSteer identifier. This reduces processing complexity of the first device. In addition, this helps ensure uniqueness of the DualSteer identifier in the third network element.

According to a second aspect, this application provides a communication method. The method may be performed by a third network element, and the third network element is a data management network element, and is configured to manage data information of a first terminal and a second terminal. The third network element may be a second network element, or may be a component (for example, a processor, a chip, or a chip system) in a third network element, or may be a logic module or software that implements all or a part of functions of a third network element. This is not specifically limited herein in this application.

The method includes: receiving a third message from a first network element, where the third message includes a second identity of a first terminal and a second identity of a second terminal, the first network element is configured to perform access management of the first terminal, and the third message is for requesting the first terminal and the second terminal to perform DualSteer; determining first information based on the second identity of the first terminal and the second identity of the second terminal, where the first information indicates that the first terminal and the second terminal are allowed to perform DualSteer; and sending the first information to the first network element.

In this application, the third network element receives the third message, from the first network element, for requesting the first terminal and the second terminal to perform DualSteer, where the third message includes the second identity of the first terminal and the second identity of the second terminal; the third network element determines the first information based on the second identity of the first terminal and the second identity of the second terminal; and then, the third network element sends the first information to the first network element. In this way, the first network element may determine that the first terminal and the second terminal are allowed to perform DualSteer.

In an optional implementation, the third network element determines the first information based on the second identity of the first terminal, the second identity of the second terminal, and subscription information, where the subscription information indicates that the first terminal is associated with the second terminal.

In this application, the third network element determines the first information based on the second identity of the first terminal, the second identity of the second terminal, and the subscription information, thereby improving data processing efficiency.

In an optional implementation, the third network element determines the first information based on the second identity of the first terminal, the second identity of the second terminal, and serving network capability information, where the serving network capability information includes a serving network of the first terminal supporting DualSteer and/or a serving network of the second terminal supporting DualSteer.

In this application, the third network element determines the first information based on the second identity of the first terminal, the second identity of the second terminal, and the serving network capability information. In this case, after obtaining the first information, the first terminal and/or the second terminal may directly perform DualSteer.

In an optional implementation, when the serving network capability information includes the serving network of the second terminal supporting DualSteer, the third network element receives fourth information from a second network element, where the fourth information indicates that the serving network of the second terminal supports DualSteer.

In this way, the third network element may learn, based on the fourth information, that the serving network of the second terminal supports DualSteer.

In an optional implementation, the third message further includes second indication information, and the second indication information is for requesting the first terminal and the second terminal to perform DualSteer.

In this application, when the first message includes the first indication information, the third message further includes the second indication information, and the third network element may directly determine, based on the second indication information, to request the first terminal and the second terminal to perform DualSteer.

In an optional implementation, the method further includes: sending the first information to the second network element, where the second network element is configured to perform access management of the second terminal.

In this application, the third network element sends the first information to the second network element. In this way, the second network element may determine that the first terminal and the second terminal are allowed to perform DualSteer.

According to a third aspect, this application provides a communication method. The method may be performed by a third network element, and the third network element is a data management network element, and is configured to manage data information of a first terminal and a second terminal. The third network element may be a third network element, or may be a component (for example, a processor, a chip, or a chip system) in a third network element, or may be a logic module or software that implements all or a part of functions of a third network element. This is not specifically limited herein in this application.

The method includes: receiving a third message from a first network element, where the third message includes a DualSteer identifier and a second identity of a first terminal; the DualSteer identifier is generated by the first terminal or a second terminal, or the DualSteer identifier is generated by the third network element; the first network element is configured to perform access management of the first terminal; the DualSteer identifier is related to the second terminal; and the third message is for requesting the first terminal and the second terminal to perform DualSteer; determining first information based on the DualSteer identifier and the second identity of the first terminal, where the first information indicates that the first terminal and the second terminal are allowed to perform DualSteer; and sending the first information to the first network element.

In this application, the third network element receives the third message, from the first network element, for requesting the first terminal and the second terminal to perform DualSteer, where the third message includes the second identity of the first terminal and the DualSteer identifier; the third network element determines the first information based on the second identity of the first terminal and the DualSteer identifier; and then, the third network element sends the first information to the first network element. In this way, the first network element may determine that the first terminal and the second terminal are allowed to perform DualSteer. Using the DualSteer identifier can avoid using a first identity of the second terminal, thereby helping protect information about the second terminal.

In an optional implementation, the third network element further generates the DualSteer identifier based on DualSteer capability information of the second terminal and/or DualSteer subscription information of the second terminal, and sends the DualSteer identifier to a second network element, where the second network element is configured to perform access management of the second terminal.

In this application, the third network element generates the DualSteer identifier, and the first terminal or the second terminal does not need to generate the DualSteer identifier. This reduces data processing of the first terminal or the second terminal, and reduces processing complexity of the first terminal or the second terminal.

In an optional implementation, the third network element further stores a first association relationship between the DualSteer identifier and a second identity of the second terminal.

In this application, the third network element stores the first association relationship between the DualSteer identifier and the second identity of the second terminal, so that the third network element determines the second identity of the second terminal after receiving the DualSteer identifier.

In an optional implementation, the second network element determines the first information based on the DualSteer identifier, the second identity of the first terminal, and subscription information, where the subscription information indicates that the first terminal is associated with the second terminal.

In this application, the third network element determines the first information based on the second identity of the first terminal, the DualSteer identifier, and the subscription information, thereby improving data processing efficiency.

In an optional implementation, the second network element determines the first information based on the DualSteer identifier, the second identity of the first terminal, and the serving network capability information, where the serving network capability information includes a serving network of the first terminal supporting DualSteer and/or a serving network of the second terminal supporting DualSteer.

In this application, the third network element determines the first information based on the second identity of the first terminal, the DualSteer identifier, and the serving network capability information. In this case, after obtaining the first information, the first terminal and/or the second terminal may directly perform DualSteer.

In an optional implementation, when the serving network capability information includes the serving network of the second terminal supporting DualSteer, the second network element further receives fourth information from the second network element, where the fourth information indicates that the serving network of the second terminal supports DualSteer.

In an optional implementation, the third message further includes second indication information, and the second indication information is for requesting the first terminal and the second terminal to perform DualSteer.

In an optional implementation, the third network element further sends the first information to the second network element, where the second network element is configured to perform access management of the second terminal.

According to a fourth aspect, this application provides a communication method. The method may be performed by a first network element, and the first network element is an access management network element of a first terminal. The first network element may be a first network element, or may be a component (for example, a processor, a chip, or a chip system) in a first network element, or may be a logic module or software that implements all or a part of functions of a fourth network element. This is not specifically limited herein in this application.

The method includes: receiving a first message from a first terminal, where the first message includes a first identity of a second terminal, and the first message is for requesting the first terminal and the second terminal to perform DualSteer; obtaining a second identity of the second terminal based on the first identity of the second terminal; sending a third message, where the third message includes a second identity of the first terminal and the second identity of the second terminal; and receiving first information, where the first information indicates that the first terminal and the second terminal are allowed to perform DualSteer.

In this application, the first network element obtains the second identity of the second terminal based on the first identity of the second terminal in the first message, and then sends, to the third network element, the third message for requesting the first terminal and the second terminal to perform DualSteer, where the third message includes the second identity of the first terminal and the second identity of the second terminal; the third network element determines the first information based on the second identity of the first terminal and the second identity of the second terminal; and then, the third network element sends the first information to the first network element. In this way, the first network element may determine that the first terminal and the second terminal are allowed to perform DualSteer.

In an optional implementation, the first network element sends the first identity of the second terminal to a fourth network element or a second network element, where the fourth network element is configured to perform authentication management of the second terminal, and the second network element is configured to perform access management of the second terminal; and receives the second identity of the second terminal from the fourth network element or the second network element.

In this application, the first network element may send the first identity of the second terminal to the fourth network element configured to perform authentication management of the second terminal or the second network element configured to perform access management of the second terminal; and obtain the second identity of the second terminal, thereby improving data processing efficiency.

In an optional implementation, the first network element further stores the first information.

In this application, the first network element stores the first information, so that when the first terminal requests to establish a DualSteer session, the first terminal is allowed to establish the DualSteer session.

In an optional implementation, the first network element further obtains DualSteer policy information based on the first information, and sends the DualSteer policy information to the first terminal.

In this application, the first network element may determine, based on the DualSteer policy information, services for which DualSteer needs to be performed.

In an optional implementation, the first network element sends a policy request message to a fifth network element, where the policy request message includes third indication information, the third indication information is for requesting the policy information for the first terminal and the second terminal to perform DualSteer, and the fifth network element is configured to perform policy management of the first terminal; and receives the DualSteer policy information from the fifth network element.

In an optional implementation, the first network element further determines, based on the first information, that the first terminal is allowed to establish a DualSteer session.

In this way, when the first terminal requests to establish the DualSteer session, the first network element may allow the first terminal to establish the DualSteer session.

In an optional implementation, the first message further includes first indication information, the first indication information is for requesting the first terminal and the second terminal to perform DualSteer, the third message further includes second indication information, and the first indication information is for requesting the first terminal and the second terminal to perform DualSteer.

According to a fifth aspect, this application provides a communication method. The method may be performed by a first network element, and the first network element is an access management network element of a first terminal. The first network element may be a first network element, or may be a component (for example, a processor, a chip, or a chip system) in a first network element, or may be a logic module or software that implements all or a part of functions of a fourth network element. This is not specifically limited herein in this application.

The method includes: receiving a first message from a first terminal, where the first message includes a DualSteer identifier; the DualSteer identifier is generated by the first terminal or a second terminal, or the DualSteer identifier is generated by a third network element; the third network element is configured to manage data information of the second terminal; the DualSteer identifier is related to the second terminal; and the first message is for requesting the first terminal and the second terminal to perform DualSteer; sending a third message, where the third message includes a second identity of the first terminal and the DualSteer identifier; and receiving first information, where the first information indicates that the first terminal and the second terminal are allowed to perform DualSteer.

In this application, the first network element obtains the second identity of the second terminal based on the DualSteer identifier in the first message, and then sends, to the third network element, the third message for requesting the first terminal and the second terminal to perform DualSteer, where the third message includes the second identity of the first terminal and the DualSteer identifier; the third network element determines the first information based on the second identity of the first terminal and the DualSteer identifier; and then, the third network element sends the first information to the first network element. In this way, the first network element may determine that the first terminal and the second terminal are allowed to perform DualSteer. Using the DualSteer identifier can avoid using a first identity of the second terminal, thereby helping protect information about the second terminal.

In an optional implementation, that the first message includes the DualSteer identifier includes: The first message includes a DualSteer request container, and the DualSteer request container includes the DualSteer identifier.

In an optional implementation, the first network element further stores the first information.

In an optional implementation, the first network element further obtains DualSteer policy information based on the first information, and sends the DualSteer policy information to the first terminal.

In an optional implementation, the first network element further sends a policy request message to a fifth network element, where the policy request message includes third indication information, the third indication information is for requesting the policy information for the first terminal and the second terminal to perform DualSteer, and the fifth network element is configured to perform policy management of the first terminal; and receives the DualSteer policy information from the fifth network element.

In an optional implementation, the first network element further determines, based on the first information, that the first terminal is allowed to establish a DualSteer session.

In an optional implementation, the first message further includes first indication information, the first indication information is for requesting the first terminal and the second terminal to perform DualSteer, the third message further includes second indication information, and the first indication information is for requesting the first terminal and the second terminal to perform DualSteer.

According to a sixth aspect, an embodiment of this application provides a communication apparatus. The communication apparatus may be a first device (a first terminal and a second terminal), a first network element, or a third network element. The communication apparatus has a function for implementing the first aspect to the fifth aspect. For example, the communication apparatus includes a corresponding module, unit, or means (means) for performing the steps in the first aspect to the fifth aspect. The function, unit, or means may be implemented by software, or may be implemented by hardware, or may be implemented by hardware executing corresponding software.

In a possible design, the communication apparatus includes a processing unit and a transceiver unit. The transceiver unit may be configured to send and receive a signal, to implement communication between the communication apparatus and another apparatus. For example, the transceiver unit is configured to receive a first message. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to send and receive a signal, and the processor executes program instructions, to complete the method in any possible design or implementation of the first aspect to the fifth aspect. The communication apparatus may further include one or more memories. The memory is configured to be coupled to the processor. The memory may store a necessary computer program or instructions for implementing the function in the first aspect. The processor may execute the computer program or instructions stored in the memory. When the computer program or instructions are executed, the communication apparatus is enabled to implement the method in any possible design or implementation of the first aspect to the fifth aspect.

In another possible design, the communication apparatus includes a processor. The processor may be configured to be coupled to a memory. The memory may store a necessary computer program or instructions for implementing the functions in the first aspect to the fifth aspect. The processor may execute the computer program or instructions stored in the memory. When the computer program or instructions are executed, the communication apparatus is enabled to implement the method in any possible design or implementation of the first aspect to the fifth aspect.

In another possible design, the communication apparatus includes a processor and an interface circuit. The processor is configured to: communicate with another apparatus through the interface circuit, and perform the method in any possible design or implementation of the first aspect to the fifth aspect.

It may be understood that, in the sixth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and there may be one or more memories. The memory may be integrated with the processor, or may be disposed separately from the processor. In a specific implementation process, the memory and the processor may be integrated on a same chip, or may be separately disposed on different chips. A type of the memory and a manner in which the memory and the processor are disposed are not limited in embodiments of this application.

According to a seventh aspect, an embodiment of this application provides a communication system. The communication system includes the first device (the first terminal and the second terminal), the first network element, the second network element, the third network element, the fourth network element, and the fifth network element.

According to an eighth aspect, this application provides a chip system. The chip system includes a processor, and may further include a memory, configured to implement the methods in the first aspect to the fifth aspect. The chip system may include a chip, or may include a chip and another discrete device.

According to a ninth aspect, this application further provides a computer-readable storage medium. The computer-readable storage medium stores computer-readable instructions. When the computer-readable instructions are run on a computer, the computer is enabled to perform the methods in the first aspect to the fifth aspect.

According to a tenth aspect, this application provides a computer program product including instructions. When the computer program product runs on a computer, the computer is enabled to perform the methods in the embodiments in the first aspect to the fifth aspect.

For technical effect that can be achieved in the second aspect to the tenth aspect, refer to the descriptions of the technical effect that can be achieved in the corresponding possible design solutions in the first aspect. Details are not described herein again in this application.

### BRIEF DESCRIPTION OF DRAWINGS

FIG. 1 is a diagram of a communication system according to an embodiment of this application;
FIG. 2 is a diagram of a scenario of a DualSteer session;
FIG. 3A and FIG. 3B are a schematic flowchart of a DualSteer session association method;
FIG. 4 is a schematic flowchart of a communication method according to an embodiment of this application;
FIG. 5A and FIG. 5B are a schematic flowchart of a communication method according to an embodiment of this application;
FIG. 6A and FIG. 6B are a schematic flowchart of a communication method according to an embodiment of this application;
FIG. 7A and FIG. 7B are a schematic flowchart of a communication method according to an embodiment of this application;
FIG. 8 is a schematic flowchart of a communication method according to an embodiment of this application;
FIG. 9A and FIG. 9B are a schematic flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. In the descriptions of this application, unless otherwise specified, "a plurality of" means two or more than two. Therefore, for implementations of the apparatus and the method, reference may be made to each other, and repeated parts are not described again.

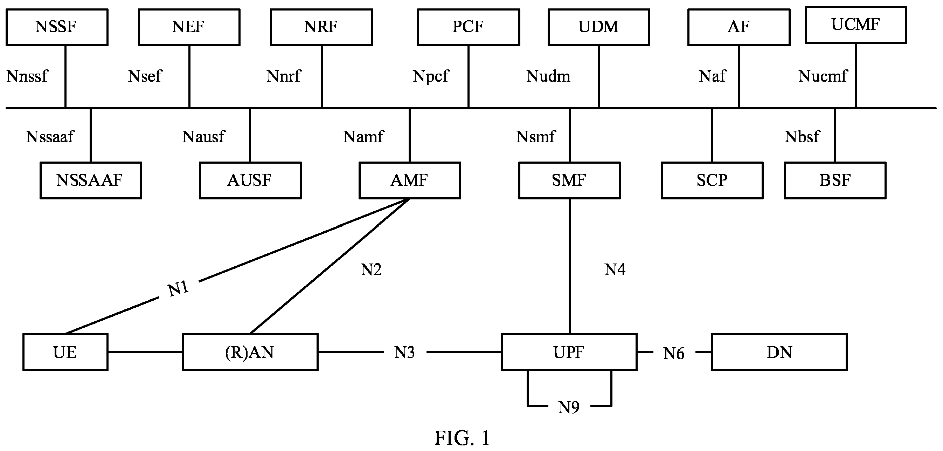

FIG. 1 is a diagram of a mobile communication network architecture. The network architecture includes a terminal, an access network device, an access and mobility management function, a session management function, a user plane function, a policy control function, a network slice selection function, a network slice-specific authentication and authorization function, a network repository function, a network data analytics function, a unified data management function, a unified data storage function, an authentication service function, a network capability exposure function, a terminal radio capability management function, a binding support function, an application function, and a data network (data network, DN) connected to an operator network. The terminal may access a wireless network via an access node at a current location. The terminal device may send service data to the data network and receive service data from the data network through the access network device and the user plane function.

The access and mobility management function is mainly configured to perform attachment, mobility management, a tracking area update procedure, and the like of the terminal in a mobile network. In a 5G communication system, the access and mobility management function may be an access and mobility management function (access and mobility management function, AMF). In a future communication system (for example, a 6G communication system), the access and mobility management function may still be an AMF, or may have another name. This is not limited in this application.

The session management function is mainly configured to perform session management in a mobile network, for example, session establishment, modification, and release. Specific functions are, for example, allocating an internet protocol address to a terminal, and selecting a user plane function that provides a packet forwarding function. In a 5G communication system, the session management function may be a session management function (session management function, SMF). In a future communication system (for example, a 6G communication system), the session management function may still be an SMF, or may have another name. This is not limited in this application. This application further relates to a multicast/broadcast session management network element. The multicast/broadcast session management network element may be a multicast session management network element (multicast/broadcast-session management function, MB-SMF), and is mainly configured to perform session management in the mobile network, for example, session establishment, modification, and release.

The user plane function is mainly configured to perform processing, for example, forwarding and charging, on a user packet. In a 5G communication system, the user plane function may be a user plane function (user plane function, UPF). In a future communication system (for example, a 6G communication system), the user plane function may still be a UPF, or may have another name. This is not limited in this application.

The policy control function includes a policy control function, a charging policy control function, a QoS control function, and the like. In a 5G communication system, the policy control function may be a policy control function (policy control function, PCF). In a future communication system (for example, a 6G communication system), the policy control function may still be a PCF, or may have another name. This is not limited in this application.

The network slice selection function is mainly configured to select an appropriate network slice for a service of the terminal. In a 5G communication system, the network slice selection function may be a network slice selection function (network slice selection function, NSSF). In a future communication system (for example, a 6G communication system), the network slice selection function may still be an NSSF, or may have another name. This is not limited in this application.

The network slice-specific authentication and authorization function (network slice-specific authentication and authorization function, NSSAAF) is mainly configured to perform authentication and authorization on access of the terminal to a specific network slice.

The network repository function is mainly configured to provide registration and discovery of a network function or a service provided by the network function. In a 5G communication system, the network repository function may be a network repository function (network repository function, NRF). In a future communication system (for example, a 6G communication system), the network repository function may still be an NRF, or may have another name. This is not limited in this application.

The network data analytics function may collect data from various network functions, for example, the policy control function, the session management function, the user plane function, the access management function, and the application function (via the network capability exposure function), and perform analysis and prediction. In a 5G communication system, the network data analytics function may be a network data analytics function (network data analytics function, NWDAF). In a future communication system (for example, a 6G communication system), the network data analytics function may still be an NWDAF, or may have another name. This is not limited in this application.

The unified data management function is mainly configured to manage subscription information of the terminal. In a 5G communication system, the unified data management function may be a unified data management (unified data management, UDM) function. In a future communication system (for example, a 6G communication system), the unified data management function may still be a UDM function, or may have another name. This is not limited in this application.

The unified data repository function is mainly configured to store structured data information, including subscription information, policy information, and network data or service data defined in a standard format. In a 5G communication system, the unified data repository function may be a unified data repository (unified data repository, UDR) function. In a future communication system (for example, a 6G communication system), the unified data repository function may still be a UDR function, or may have another name. This is not limited in this application.

The authentication service function is mainly configured to perform security authentication on the terminal. In a 5G communication system, the authentication service function may be an authentication server function (authentication server function, AUSF). In a future communication system (for example, a 6G communication system), the authentication service function may still be an AUSF, or may have another name. This is not limited in this application.

The network capability exposure function may expose some functions of the network to an application in a controlled manner. In a 5G communication system, the network capability exposure function may be an NEF. In a future communication system (for example, a 6G communication system), the network capability exposure function may still be an NEF, or may have another name. This is not limited in this application.

The terminal radio capability management function is configured to store and manage a radio capability of the terminal in the network. In a 5G communication system, the terminal radio capability management function may be a terminal radio capability management function (user equipment radio capability management function, UCMF). In a future communication system (for example, a 6G communication system), the terminal radio capability management function may still be a UCMF, or may have another name. This is not limited in this application.

The binding support function is configured to maintain a correspondence between a user internet protocol (Internet Protocol, IP) address and a service function. In a 5G communication system, the binding support function may be a binding support function (binding support function, BSF). In a future communication system (for example, a 6G communication system), the binding support function may still be a BSF, or may have another name. This is not limited in this application.

The application function may provide service data of various applications for a control plane function of a communication network of an operator, or obtain data information and control information of the network from the control plane function of the communication network. In a 5G communication system, the application function may be an application function (application function, AF). In a future communication system (for example, a 6G communication system), the application function may still be an AF, or may have another name. This is not limited in this application.

The data network is mainly configured to provide a data transmission service for the terminal. The data network may be a private network, for example, a local area network, or may be a public data network (public data network, PDN), for example, the internet (Internet), or may be a dedicated network deployed by an operator, for example, a configured IP multimedia network subsystem (internet protocol multimedia core network subsystem, IMS) service.

It should be noted that, the function in embodiments of this application may also be referred to as a network element, a network function, a function entity, a device, or the like. For example, the access and mobility management function may also be referred to as an access and mobility management network element, an access and mobility management network function, an access and mobility management function entity, or the like. Names of functions are not limited in this application. A person skilled in the art may replace the names of the functions with other names to perform same functions. This falls within the protection scope of this application.

For ease of understanding embodiments of this application, the following first briefly describes terms or processing procedures in embodiments of this application.

### (1) First device

The first device includes at least two terminals and/or at least two subscriber identity modules (for example, universal subscriber identity module (universal subscriber identity module, USIM) cards). For example, the first device includes a terminal 1 and a terminal 2; or the first device includes a USIM card 1 and a USIM card 2; or the first device includes a terminal 1, a terminal 2, and a terminal 3; or the first device includes a USIM card 1, a USIM card 2, and a USIM card 3. This is merely an example for description herein, and is not specifically limited. Optionally, the first device includes at least two protocol stacks (Stack), the terminal 1 is replaced with a protocol stack 1, and the terminal 2 is replaced with a protocol stack 2.

In embodiments of this application, two terminals included in the first device are used as an example for description. The two terminals may be two devices/apparatuses. Alternatively, two UEs included in the first device may be two USIMs. For example, a first UE may be a first USIM, and a second UE may be a second USIM. Alternatively, the first device is a terminal, the terminal includes two USIMs, a first UE corresponds to a first USIM, and a second UE corresponds to a second USIM. Correspondingly, in embodiments of this application, the first device may be replaced with the terminal, the UE may be replaced with the USIM, the first UE may be replaced with the first USIM, and the second UE may be replaced with the second USIM. Alternatively, the first device is a DualSteer device, the DualSteer device includes two USIMs, a first UE corresponds to a first USIM, and a second UE corresponds to a second USIM. Correspondingly, in embodiments of this application, the first device may be replaced with the DualSteer device, the UE may be replaced with the USIM, the first UE may be replaced with the first USIM, and the second UE may be replaced with the second USIM.

### (2) DualSteer

A first device includes a terminal 1 and a terminal 2. The first device may perform DualSteer. To be specific, service data of the first device may be steered to the terminal 1 or the terminal 2 for transmission, or may be switched from the terminal 1 to the terminal 2 for transmission. Alternatively, the terminal 1 and the terminal 2 belong to a same user, and service data of the user may be steered to the terminal 1 or the terminal 2 for transmission, or may be switched from the terminal 1 to the terminal 2 for transmission.

### (3) DualSteer session (which may also be referred to as an inter-UE associated session) (DualSteer session)

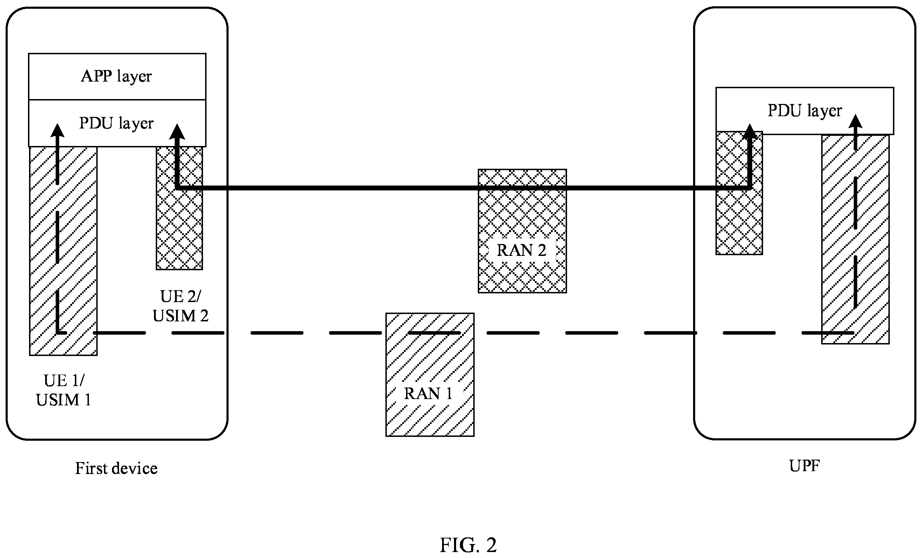

Herein, an example in which a first device includes two UEs (a UE 1 and a UE 2) or two USIM cards (a USIM card 1 and a USIM card 2) is used for description. FIG. 2 shows that a PDU session (PDU session ID#1) of the UE 1 and a PDU session (PDU session ID#2) of the UE 2 share a same IP address. The UE 1 creates the PDU session ID#1 via a RAN 1, and the UE 2 creates the PDU session ID#2 via a RAN 2. The RAN 1 and the RAN 2 are of 3GPP access types (3GPP Access Type). The RAN 1 and the RAN 2 may have a same (or different) radio access technology type (radio access technology type, RAT Type). The RAT type may be 5G NR, 5G NR (satellite), or 6G RAT. For example, the RAN 1 is 5G NR, and the RAN 2 is 6G RAT.

Before a service is switched between the UE 1 and the UE 2, service data corresponding to this IP is transmitted via the PDU session ID#1 of the UE 1 (that is, a PDU layer is associated with a transmission channel of the UE 1 (channel from the UE 1 to the RAN 1 (ye))). After the service is switched between the UE 1 and the UE 2, the service data corresponding to this IP is transmitted via the PDU session ID #2 of the UE 2 (that is, the PDU layer is associated with a transmission channel of the UE 2 (channel from the UE 2 to the RAN 2 (ye))). Before and after the service is switched between the UE 1 and the UE 2, a connection (for example, a socket connection) between the PDU layer and an application layer (App layer) does not change. In other words, the IP address used by an application does not change, and service continuity is not affected. Further, activation of the PDU session ID #2 of the UE 2 may further trigger deactivation or release of the PDU session ID #1 of the UE 1.

DualSteer may be an attribute or a purpose of a PDU session. For example, a type of the PDU session is DualSteer, or the PDU session is used to provide a DualSteer function. Service data carried in the PDU session may be steered to a first terminal or a second terminal.

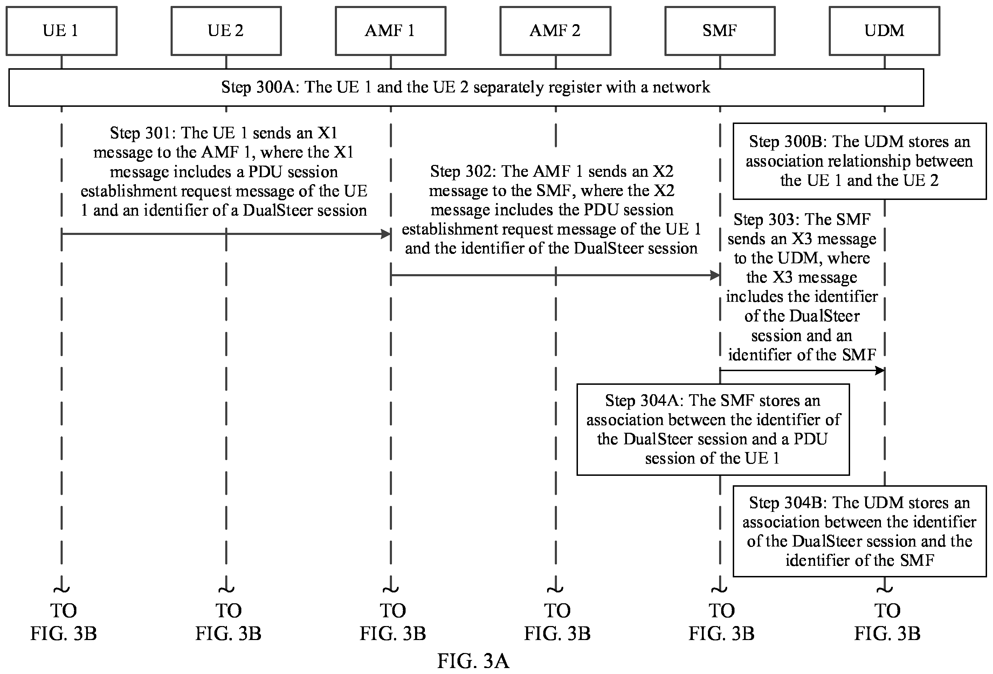

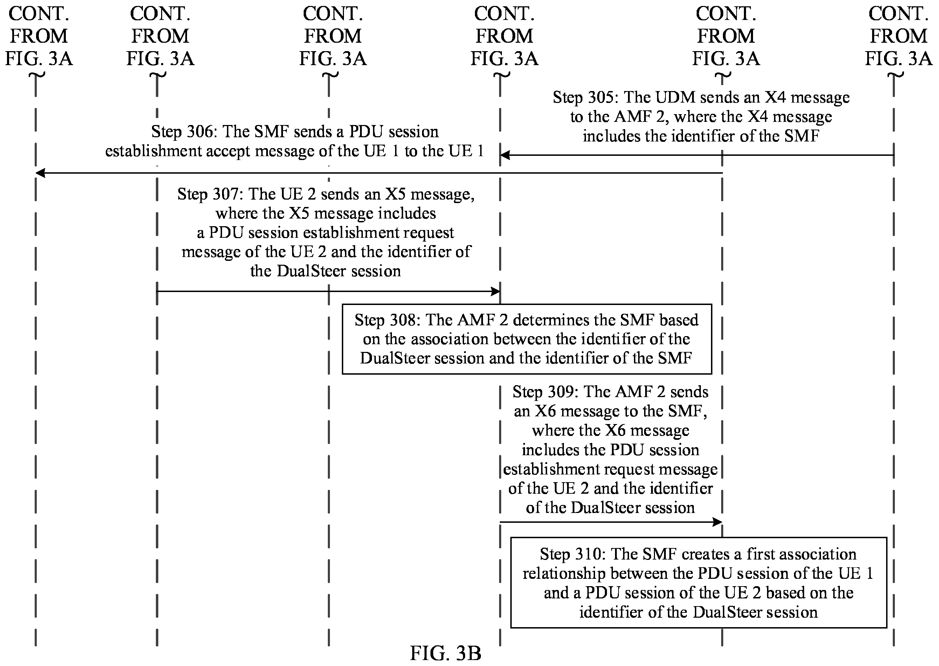

Creation of a DualSteer PDU session can reduce a delay of switching a service between different UEs, thereby improving service experience of a user. A session association between UEs may be understood with reference to FIG. 3A and FIG. 3B. The following describes a solution of session association between UEs through data exchange between a UE 1, a UE 2, an AMF 1, an AMF 2, an SMF, and a UDM. Details are as follows.

Step 300A: The UE 1 and the UE 2 separately register with a network.

Step 300B: The UDM stores an association relationship between the UE 1 and the UE 2.

For example, an SUPI 1 (an identity of the UE 1) is associated with an SUPI 2 (an identity of the UE 2). It should be understood that, in a process in which an operator registers the UEs, the two UEs are associated (for example, both the UE 1 and the UE 2 belong to a same user). Therefore, the UDM may store the association relationship between the SUPI 1 and the SUPI 2.

Step 301: The UE 1 sends an X1 message to the AMF 1, where the X1 message includes a PDU session establishment request message of the UE 1 and an identifier of a DualSteer session. Correspondingly, the AMF 1 receives the X1 message.

It should be noted that, in step 301, the identifier of the DualSteer session may be generated by the UE 1 or the UE 2. This is not specifically limited herein.

When step 301 is performed, the UE 1 may forward the X1 message to the AMF 1 via a RAN 1.

Step 302: The AMF 1 sends an X2 message to the SMF, where the X2 message includes the PDU session establishment request message of the UE 1 and the identifier of the DualSteer session. Correspondingly, the SMF receives the X2 message.

Optionally, the AMF 1 selects, based on the identifier of the DualSteer session, the SMF that supports DualSteer.

In addition, the AMF 1 performs step 303 only when determining, according to step 300A, that the UE 1 supports DualSteer. Otherwise, the AMF 1 sends a rejection message to the UE 1.

Step 303: The SMF sends an X3 message to the UDM, where the X3 message includes the identifier of the DualSteer session and an identifier of the SMF. Correspondingly, the UDM receives the X3 message.

In addition, the SMF performs step 303 only when determining, according to step 300A, that the UE 1 supports DualSteer. Otherwise, the SMF sends a rejection message to the UE 1.

Step 304A: The SMF stores an association between the identifier of the DualSteer session and a PDU session of the UE 1.

In addition, the SMF further selects a UPF for the PDU session of the UE 1, allocates an IP address to the UE 1, and allocates an N4 session ID to the PDU session of the UE 1, where the N4 session ID is used for interaction between the SMF and the UPF.

Step 304B: The UDM stores an association between the identifier of the DualSteer session and the identifier of the SMF.

Step 305: The UDM sends an X4 message to the AMF 2, where the X4 message includes the identifier of the SMF. Correspondingly, the AMF 2 receives the X4 message.

For example, the UDM may determine the UE 2 based on the association relationship between the UE 1 and the UE 2 in step 300B, and determine the AMF 2 based on registration information of the UE 2 in step 300A.

Step 306: The SMF sends a PDU session establishment accept message of the UE 1 to the UE 1.

For example, the establishment accept message includes the IP address allocated by the SMF to the UE 1.

Step 307: The UE 2 sends an X5 message, where the X5 message includes a PDU session establishment request message of the UE 2 and the identifier of the DualSteer session (which is the same as the identifier of the DualSteer session in step 301). Correspondingly, the AMF 2 receives the X5 message.

When step 307 is performed, the UE 2 may forward the X5 message to the AMF 2 via a RAN 2.

Step 308: The AMF 2 determines the SMF based on the association between the identifier of the DualSteer session and the identifier of the SMF.

Step 309: The AMF 2 sends an X6 message to the SMF, where the X6 message includes the PDU session establishment request message of the UE 2 and the identifier of the DualSteer session. Correspondingly, the SMF receives the X6 message.

Step 310: The SMF creates a first association relationship between the PDU session of the UE 1 and a PDU session of the UE 2 based on the identifier of the DualSteer session.

For example, the SMF searches, based on the identifier of the DualSteer session received in step 309, the association between the identifier of the DualSteer session and the PDU session of the UE 1 stored in step 304A, to obtain an identifier of the PDU session 1; and creates the first association relationship between the identifier of the PDU session 1 and an identifier of the PDU session 2.

Based on this, the identifier of the PDU session 1 of the UE 1 is associated with the identifier of the PDU session 2 of the UE 2. However, related technologies do not describe how to determine whether to perform the procedure in FIG. 3A and FIG. 3B (or how to determine whether to perform DualSteer). In view of this, this application provides a communication method, to specify how to determine that a first device can perform DualSteer. The method may be described through data exchange between a first terminal, a second terminal, a first network element, a second network element, and a third network element as an example. The first terminal and the second terminal may be terminals or USIM cards in the first device. The first terminal and the second terminal may alternatively belong to different devices that can share an IP address. For example, a mobile phone and a vehicle of a user A are located at a same spatial location (the mobile phone is located in the vehicle, or a distance between the mobile phone and the vehicle falls within a distance threshold range), and the mobile phone and the vehicle may share a same IP address. In this case, the mobile phone may be understood as the first terminal, and the vehicle may be understood as the second terminal. Alternatively, a mobile phone and a tablet computer of a user A are located at a same spatial location (a distance between the mobile phone and the tablet computer falls within a distance threshold range), and the mobile phone and the tablet computer may share a same IP address. In this case, the mobile phone may be understood as the first terminal, and the tablet computer may be understood as the second terminal. Whether the first terminal and the second terminal are located in a same device or different devices is not specifically limited herein in this application. During specific application, another terminal may be further used. A quantity of terminals is not limited herein in this application, provided that the terminals may share a same IP address. In this application, the first terminal and the second terminal are used as an example for description.

The first network element and the second network element are configured to perform attachment, mobility management, and a tracking area update procedure, and the like of a terminal in a mobile network. For example, the first network element is an AMF. The third network element is configured to manage subscription information of a terminal. For example, the third network element is a UDM. Refer to the following two specific embodiments for understanding.

### Embodiment 1

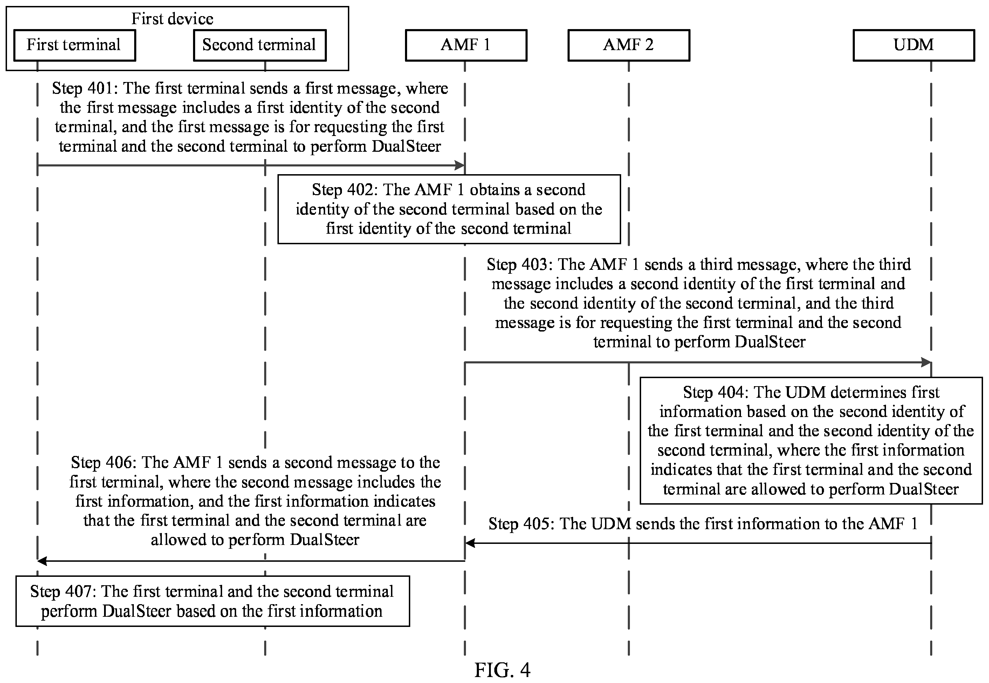

For example, in FIG. 4, a first terminal and a second terminal are located in a first device; a first network element is configured to perform access management of the first terminal, and the first network element is an AMF 1; a second network element is configured to perform access management of the second terminal, and the second network element is an AMF 2; and a third network element is a UDM. The following steps are performed.

Step 401: The first terminal sends a first message, where the first message includes a first identity of the second terminal, and the first message is for requesting the first terminal and the second terminal to perform DualSteer (namely, the foregoing DualSteer session). Correspondingly, the AMF 1 receives the first message.

It should be noted that the first message may be a message of a new type, the first message is associated with DualSteer, and it may be determined, based on the first message, that DualSteer is requested to be performed. Alternatively, an existing NAS message is reused as the first message, and information like DualSteer request information is carried in the NAS message, so that a network element in a core network determines that DualSteer is to be performed. This is not specifically limited herein.

That the first terminal sends the first message may be understood as that the first device sends the first message via the first terminal.

To facilitate that the first message of the AMF 1 is for requesting the first terminal and the second terminal to perform DualSteer, the first message includes the first identity of the second terminal. The first identity may be an identity of a terminal for interacting between a core network device and an access network device, for example, a subscription concealed identifier (subscription concealed identifier, SUCI) or a 5G-GUTI (5G globally unique temporary identity). This is merely an example for description herein, and a form of the first identity is not specifically limited. In addition, that the first message includes the first identity of the second terminal may also be understood as that the first message includes a DualSteer request container and the DualSteer request container includes the first identity of the second terminal.

In addition, the first message may further include first indication information, and the first indication information is for requesting the first terminal and the second terminal to perform DualSteer or requesting the first device to be in a DualSteer mode. The first indication information may be DualSteer request indication information (for example, a DualSteer request (DualSteer request), or an association request (Association request), or a DualSteer mode (DualSteer mode)). The first indication information may indicate, based on a parameter, for example, indicate, based on a parameter 1, to request the first terminal and the second terminal to perform DualSteer.

In addition, when the first message is a NAS message, the NAS message may be a registration request (Registration Request) message or a service request (Service Request) message, and the NAS message includes the first indication message and the first identity of the second terminal. The NAS message may further include a PDU session establishment request (PDU Session establishment request) message of a UE 1. This is not specifically limited herein in this application.

It should be further noted that, in addition to the first identity of the second terminal, the first message usually further includes a first identity of the first terminal.

Step 402: The AMF 1 obtains a second identity of the second terminal based on the first identity of the second terminal.

The second identity may be an identity of a terminal for interacting between core network devices, for example, a subscription permanent identifier (subscription permanent identifier, SUPI).

For example, when step 402 is performed, the AMF 1 may send the first identity of the second terminal to a fourth network element (the fourth network element is configured to perform authentication management of the second terminal, for example, the fourth network element is an AUSF), and after parsing the second identity of the second terminal, the fourth network element sends the second identity of the second terminal to the AMF 1. For example, the AMF 1 requests the AUSF to convert an SUCI 2 (the first identity of the second terminal) into an SUPI 2 (the second identity of the second terminal).

Alternatively, the AMF 1 may send the first identity of the second terminal to the AMF 2 (in a registration process of the second terminal, the AMF 2 stores the second identity of the second terminal in context of the second terminal), and after parsing the second identity of the second terminal, the AMF 2 sends the second identity of the second terminal to the AMF 1. When the first identity of the second terminal is a 5G-GUTI, the AMF 1 may determine an identifier of the AMF 2 based on <AMF Region ID> <AMF Set ID> <AMF Pointer> in construction of the 5G-GUTI. In this case, the AMF 1 requests the second identity SUPI 2 of the second terminal from the AMF 2.

Step 403: The AMF 1 sends a third message, where the third message includes a second identity of the first terminal (the AMF 1 obtains the second identity of the first terminal by searching context of the first terminal) and the second identity of the second terminal, and the third message is for requesting the first terminal and the second terminal to perform DualSteer. Correspondingly, the UDM receives the third message.

It should be noted that, when the third message includes the second identity of the second terminal, it may be understood that the third message is for requesting the first terminal and the second terminal to perform DualSteer.

In addition, when the first message includes the first indication information, the third message includes second indication information, and the second indication information is for requesting the first terminal and the second terminal to perform DualSteer. The second indication information may be the same as the first indication information. In addition to the first indication information, the second indication information may further include information added by the AMF 1, for example, a location of the first terminal. This is not specifically limited herein in this application.

Step 404: The UDM determines first information based on the second identity of the first terminal and the second identity of the second terminal, where the first information indicates that the first terminal and the second terminal are allowed to perform DualSteer.

In an implementation, the UDM may determine the first information based on the second identity of the first terminal, the second identity of the second terminal, and subscription information that are received from the AMF 1, where the subscription information is subscription information between the first terminal with a network and subscription information between the second terminal and the network, and the subscription information indicates that the second identity of the first terminal is associated with the second identity of the second terminal. For example, when the first terminal subscribes to an operator, a user to which the first terminal belongs is a user 1, and when the second terminal subscribes to the operator, a user to which the second terminal belongs is the user 1. In this case, the UDM may associate the second identity of the first terminal with the second identity of the second terminal. The UDM determines the first information based on the association between the second identity of the first terminal and the second identity of the second terminal. In other words, the first terminal and the second terminal may perform DualSteer. For another example, the first terminal and the second terminal belong to a same user. When the user subscribes to an operator, the operator may store the association between the second identity of the first terminal and the second identity of the second terminal. For another example, if subscription data of the first terminal includes the second identity of the second terminal, or subscription data of the second terminal includes the second identity of the first terminal, it is considered that the second identity of the first terminal is associated with the second identity of the second terminal.

In another implementation, the UDM may alternatively determine the first information based on the second identity of the first terminal, the second identity of the second terminal, and serving network capability information that are received from the AMF 1, where the serving network capability information includes a serving network of the first terminal supporting DualSteer and/or a serving network of the second terminal supporting DualSteer. It should be noted that, the UDM may request a serving network capability of the first terminal from the AMF 1, and the UDM may request a serving network capability of the second terminal from the AMF 2; or the UDM preconfigures a serving network capability of the first terminal and preconfigures a serving network capability of the second terminal.

In the embodiment in FIG. 4, because the UDM receives the third message from the AMF 1, and the third message is for requesting the first terminal and the second terminal to perform DualSteer, it is considered that the AMF 1 supports DualSteer (that is, the serving network of the first terminal supports DualSteer). The UDM only needs to determine whether the serving network of the second terminal supports DualSteer. For example, the UDM may request, from the AMF 2, whether the serving network of the second terminal supports DualSteer. The AMF 2 may send fourth information to the UDM, where the fourth information may indicate that the serving network of the second terminal supports DualSteer.

In still another implementation, the UDM may alternatively determine the first information based on the second identity of the first terminal, the second identity of the second terminal, subscription information, and serving network capability information that are received from the AMF 1. For example, the UDM may determine, based on the subscription information, that the second identity of the first terminal is associated with the second identity of the second terminal, and then determine the first information based on the serving network of the first terminal supporting DualSteer and the serving network of the second terminal supporting DualSteer.

It should be noted that the first information may indicate that an association between the first terminal and the second terminal is authorized, or that the first terminal and the second terminal are authorized to perform DualSteer, or that the first terminal and the second terminal are allowed to be in a DualSteer mode, or that the first device is allowed to be in a DualSteer mode. The first information may be indicated by DualSteer authorized or DualSteer allowed.

Optionally, the UDM determines fifth information based on the second identity of the first terminal and the second identity of the second terminal, where the fifth information indicates that the first terminal and the second terminal are not allowed to perform DualSteer. Alternatively, the UDM may determine the fifth information based on the second identity of the first terminal, the second identity of the second terminal, and the subscription information.

Optionally, the UDM further stores the first information or the fifth information, so that the UDM processes a subsequent DualSteer-related action, for example, coordinates session management of the first terminal and the second terminal when the first information is stored.

Step 405: The UDM sends the first information to the AMF 1. Correspondingly, the AMF 1 receives the first information.

For example, after receiving the first information, the AMF 1 determines, based on the first information, that the first terminal is allowed to establish a DualSteer session.

The AMF 1 may store the first information, to determine that the first terminal is allowed to request to perform DualSteer (that is, create the DualSteer session).

It should be noted that the UDM further sends the first information to the AMF 2, so that the AMF 2 determines, based on the first information, that the second terminal is allowed to establish a DualSteer session. Correspondingly, the AMF 2 may also store the first information, to determine that the second terminal is allowed to request to perform DualSteer (that is, create the DualSteer session).

In addition, the AMF 1 may further obtain DualSteer policy information based on the first information, and send the DualSteer policy information to the first terminal, where the DualSteer policy information may indicate that a service type for which DualSteer needs to be used. For example, the DualSteer policy information indicates that a service 1 needs to use DualSteer and a service 2 does not need to use DualSteer. In this case, when the service 1 is triggered, the first terminal determines, based on the DualSteer policy information, to use DualSteer. In addition, the DualSteer policy information may indicate a service steering or switching policy. For example, the service 1 is steered to the first terminal or the service 2 is steered to the second terminal, or the service 1 is allowed to be switched between the first terminal and the second terminal, or the service 1 is allowed to be switched between the first terminal and the second terminal. For example, the AMF 1 may send a policy request message to a fifth network element (the fifth network element is configured to perform DualSteer policy management or perform policy management of the first terminal, for example, a PCF), where the policy request message includes third indication information, and the third indication information is for requesting the policy information for the first terminal and the second terminal to perform DualSteer. Then, the AMF 1 may receive the DualSteer policy information from the fifth network element. Optionally, the third indication information is for requesting the policy information for performing DualSteer, or the third indication information is the first information. Specifically, the third indication information may be a DualSteer operation, a DualSteer indication, DualSteer authorized, or DualSteer allowed.

Step 406: The AMF 1 sends a second message to the first terminal, where the second message includes the first information, and the first information indicates that the first terminal and the second terminal are allowed to perform DualSteer. Correspondingly, the first terminal receives the second message.

It should be noted that, if the UDM determines the fifth information based on the second identity of the first terminal, the second identity of the second terminal, and the subscription information in step 404, the UDM sends the fifth information to the AMF 1 in step 405, the second message includes the fifth information in step 406, and the following step 407 is not performed. In addition, the AMF 1 may further not obtain the DualSteer policy information based on the fifth information. The AMF 1 may further determine, based on the fifth information, that the first terminal is not allowed to request to perform DualSteer.

That the first terminal receives the second message may be understood as that the first device receives the second message via the first terminal.

Step 407: The first terminal and the second terminal perform DualSteer based on the first information.

It should be noted that, when the first terminal and the second terminal determine that the serving network of the first terminal supports DualSteer and the serving network of the second terminal supports DualSteer, the first terminal and the second terminal may directly perform DualSteer based on the first information.

That the first terminal and the second terminal perform DualSteer based on the first information may be understood as that the first device performs DualSteer for the first terminal and the second terminal based on the first information, or the first device performs DualSteer based on the first information, where the DualSteer is used for the first terminal and the second terminal.

In an optional implementation, the first terminal and the second terminal perform DualSteer based on the serving network capability information and the first information. In other words, the first terminal needs to obtain serving network capability information of the first terminal, and the second terminal needs to obtain serving network capability information of the second terminal. For example, before step 401 is performed, the first terminal may register DualSteer capability information of the first terminal with the AMF 1, and the AMF 1 may feed back, to the first terminal, whether the serving network of the first terminal supports DualSteer. The second terminal may register DualSteer capability information of the second terminal with the AMF 2, and the AMF 2 may feed back, to the second terminal, whether the serving network of the second terminal supports DualSteer. In this case, the first terminal determines that the serving network of the first terminal supports DualSteer, and the second terminal determines that the serving network of the second terminal supports DualSteer. Alternatively, before step 407 is performed, the first terminal requests serving network capability information of the first terminal from the AMF 1, and receives second information from the AMF 1, where the second information indicates that the serving network of the first terminal supports DualSteer; and the second terminal requests serving network capability information of the second terminal from the AMF 2, and receives third information from the AMF 2, where the third information indicates that the serving network of the second terminal supports DualSteer. Alternatively, the first device requests serving network capability information of the first terminal from the AMF 1 via the first terminal, and the first device receives second information from the AMF 1 via the first terminal; and the first device requests serving network capability information of the second terminal from the AMF 2 via the second terminal, and the first device receives third information from the AMF 2 via the second terminal.

Optionally, after step 407, if a terminal in the first device changes, for example, the first device includes the first terminal and a third terminal, the first device needs to request the first terminal and the third terminal to perform DualSteer, and then determine, based on an authorization result sent via the network (for example, the first terminal and the third terminal are allowed to perform DualSteer, or the first terminal and the third terminal are not allowed to perform DualSteer), whether to perform DualSteer. If the first terminal and the third terminal are allowed to perform DualSteer, the first device performs DualSteer; or if the first terminal and the third terminal are not allowed to perform DualSteer, the first device does not perform DualSteer.

It should be noted that, message/information transmission between the terminal and the network element and between the network elements may be direct transmission, or may be indirect transmission via another network element or device. This is not specifically limited herein in this application. For example, that the first terminal transmits the first message to the AMF 1 may be understood as that the first terminal transmits the first message to the AMF 1 via a RAN 1, or may be understood as that the first terminal directly transmits the first message to the AMF 1. That the third message is transmitted between the AMF 1 and the UDM may be understood as that the AMF 1 transmits the third message to the UDM via an SMF or the AMF 1 directly transmits the third message to the UDM. This is merely an example for description herein.

In this application, the first device requests, from the network, the first terminal and the second terminal to perform DualSteer. The first device performs DualSteer only after receiving the first information, that is, only when the network (for example, the UDM) allows the first terminal and the second terminal to perform DualSteer. In this way, it may be determined that the first device is allowed to perform DualSteer.

The following describes the solutions of this application through data exchange between the UE 1 (namely, the first terminal), a UE 2 (namely, the second terminal), the AMF 1 (namely, the first network element), the AMF 2 (namely, the second network element), and the UDM (namely, the third network element). Descriptions are provided herein in different cases. Details are as follows.

Case 1: The UE 1/UE 2 requests, from the UDM, the UE 1 and the UE 2 to perform DualSteer; and after the UDM allows the UE 1 and the UE 2 to perform DualSteer, the UE 1/UE 2 determines, based on serving network capability information supported by the UE 1/UE 2, whether to perform DualSteer.

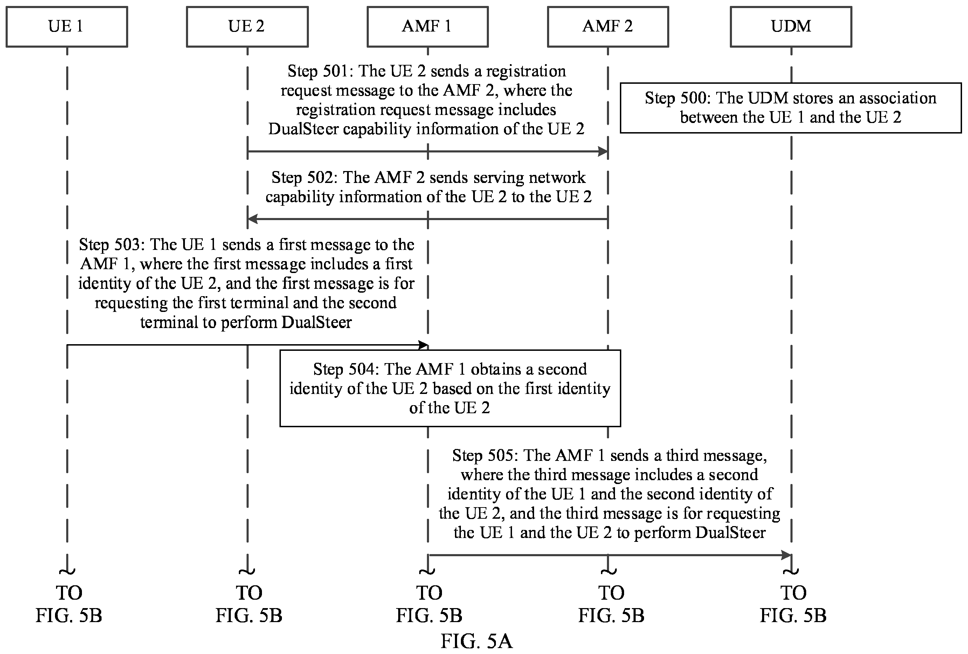

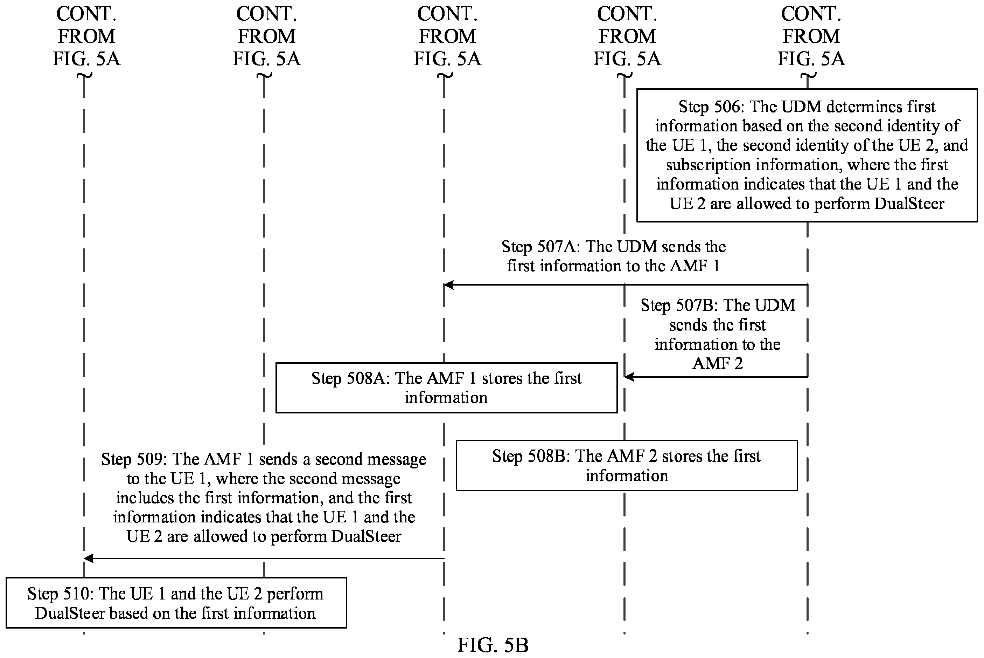

Refer to FIG. 5A and FIG. 5B. The following steps are performed.

Step 500: The UDM stores an association between the UE 1 and the UE 2.

For example, an association between a second identity (SUPI 1) of the UE 1 and a second identity (SUPI 2) of the UE 2 is stored. It should be understood that, in a process in which an operator registers the UEs, the two UEs are associated (for example, both the UE 1 and the UE 2 belong to a same user). Therefore, the UDM may store an association relationship between the SUPI 1 and the SUPI 2.

Step 501: The UE 2 sends a registration request message to the AMF 2, where the registration request message includes DualSteer capability information of the UE 2. Correspondingly, the AMF 2 receives the registration request message.

For example, if the UE 2 supports DualSteer, the registration request message may carry DualSteer support.

In addition, the registration request message may further carry a first identity of the UE 2, for example, a SUCI 2 or a 5G-GUTI 2.

Step 502: The AMF 2 sends serving network capability information of the UE 2 to the UE 2.

For example, if the AMF 2 supports DualSteer, the AMF 2 sends DualSteer support to the UE 2.

Step 503: The UE 1 sends a first message to the AMF 1, where the first message includes the first identity (SUCI or 5G-GUTI 1) of the UE 2, and the first message is for requesting the first terminal and the second terminal to perform DualSteer. Correspondingly, the AMF 1 receives the first message.

For example, the first message may directly include the first identity of the UE 2, or may include a DualSteer request container, where the first identity of the UE 2 is carried in the DualSteer request container. Refer to the description in step 401 for understanding. Details are not described herein again.

Optionally, the first message further includes first indication information, and the first indication information is for requesting the UE 1 and the UE 2 to perform DualSteer. The first indication information may be DualSteer request (DualSteer request or Association request) indication information.

Optionally, the first message may be a NAS message. The NAS message may be a registration request (Registration Request) message or a service request (Service Request) message, and the NAS message includes the first indication message and the first identity of the UE 2. When the NAS message is a registration request message, the NAS message may further include capability information of the UE 2.

Optionally, the NAS message may further include a PDU session establishment request (PDU establishment request) message of the UE 1. This is not specifically limited herein in this application.

It should be noted that, in addition to the first identity of the second terminal, the first message usually further includes a first identity of the first terminal.

It should be further noted that step 503 is performed only when a serving network of the UE 1 supports DualSteer and a serving network of the UE 2 also supports DualSteer. In addition, when the serving network of the UE 2 supports DualSteer, whether the serving network of the UE 2 supports DualSteer does not need to be determined. Because the AMF 2 can process the first message from the UE 2, it is considered by default that the serving network of the UE 2 supports DualSteer.

In addition, when the UE 1 and the UE 2 are located in the first device, step 503 is performed only when the first device enables a DualSteer mode (DualSteer mode) (that is, a mode in which service data is transmitted in a DualSteer manner is used).

Step 504: The AMF 1 obtains the second identity (for example, the SUPI 2) of the UE 2 based on the first identity of the UE 2.

For example, the AMF 1 may send the SUCI 2 to a fourth network element (for example, the fourth network element is an AUSF), and after parsing the SUCI 2 to obtain the SUPI 2, the fourth network element sends the SUPI 2 to the AMF 1. Alternatively, the AMF 1 may send the 5G-GUTI 2 to the AMF 2 (in a registration process of the second terminal, the AMF 2 stores the second identity of the UE 2 in context of the UE 2), and after parsing the 5G-GUTI 2 to obtain the SUPI 2, the AMF 2 sends the SUPI 2 to the AMF 1. Refer to the description in step 402 for understanding. Details are not described herein again.

Step 505: The AMF 1 sends a third message, where the third message includes the second identity of the UE 1 (the second identity of the UE 1 is obtained by searching context of the UE 1) and the second identity of the UE 2, and the third message is for requesting the UE 1 and the UE 2 to perform DualSteer. Correspondingly, the UDM receives the third message.

In addition, when the first message includes the first indication information, the third message includes second indication information, and the second indication information is for requesting the first terminal and the second terminal to perform DualSteer. Refer to the description in step 403 for understanding. Details are not described herein again.

Step 506: The UDM determines first information based on the second identity of the UE 1, the second identity of the UE 2, and subscription information, where the first information indicates that the UE 1 and the UE 2 are allowed to perform DualSteer.

The first information may indicate that the association between the UE 1 and the UE 2 is authorized, or that the UE 1 and the UE 2 are authorized to perform DualSteer. The first information may be indicated by DualSteer authorized or DualSteer allowed.

Step 507A: The UDM sends the first information to the AMF 1. Correspondingly, the AMF 1 receives the first information.

Step 507B: The UDM sends the first information to the AMF 2. Correspondingly, the AMF 1 receives the first information.

An execution sequence of step 507A and step 507B is not limited.

Step 508A: The AMF 1 stores the first information.

The AMF 1 stores the first information, to determine that the UE 1 is allowed to request to perform DualSteer (that is, create a DualSteer session).

Step 508B: The AMF 2 stores the first information.

The AMF 2 stores the first information, to determine that the UE 2 is allowed to request to perform DualSteer.

Optionally, the AMF 2 obtains DualSteer policy information (DualSteer policy) from a PCF based on the first information (DualSteer authorized), and sends the DualSteer policy to the UE 2. Further, the UE 2 provides the DualSteer policy for the first device to use. For example, when the AMF 2 receives DualSteer authorized, the AMF 2 sends an AMPolicyControl_Create/Update message to the PCF, where the message includes third indication information (DualSteer indication); and the PCF sends the DualSteer policy to the AMF 2 based on the DualSteer indication. The DualSteer policy is used by the first device to determine how to steer a service to the UE 1 or the UE 2 for transmission. For example, the DualSteer policy includes which services are transmitted by the UE 1 and which services are transmitted by the UE 2. For another example, the DualSteer policy includes whether all services of DualSteer are preferentially transmitted by the UE 1 or the UE 2. This is merely an example for description, and the DualSteer policy information is not specifically limited.

An execution sequence of step 508A and step 508B is not limited.

Step 509: The AMF 1 sends a second message to the UE 1, where the second message includes the first information, and the first information indicates that the UE 1 and the UE 2 are allowed to perform DualSteer. Correspondingly, the UE 1 receives the second message.

Step 510: The UE 1 and the UE 2 perform DualSteer based on the first information.

In the embodiment in FIG. 5A and FIG. 5B, because the AMF 2 sends the serving network capability information of the UE 2 to the UE 2 in step 502, the serving network capability information of the UE 2 may be obtained. In step 503, the UE 1 sends the first message to the AMF 1, and the AMF 1 can process the first message. In this case, it may be learned that the serving network of the UE 1 supports DualSteer. Therefore, step 510 is performed only when the UE 1 receives the first information and it is determined that both the serving network of the UE 1 and the serving network of the UE 2 support DualSteer.

Optionally, if the UE 1 receives DualSteer unauthorized or fails to receive DualSteer authorized, the first device (when the UE 1 and the UE 2 are located in the first device) may be in an MUSIM mode (a mode in which service data is transmitted in a DualSteer manner is not used); or if the UE 1 receives DualSteer authorized, the first device may be in the DualSteer mode.

In this embodiment, one UE in the first device initiates a DualSteer request, and the UDM determines the first information only based on the subscription information (SUPI association). The first device performs DualSteer only when the first information is obtained and the serving networks of the two UEs in the first device both support DualSteer.

Case 2: The UE 1/UE 2 requests, from the UDM, the UE 1 and the UE 2 to perform DualSteer; and the UDM determines, based on serving network capability information supported by the UE 1/UE 2 and an association between the UE 1 and the UE 2, that the UE 1 and the UE 2 are allowed to perform DualSteer. The UE 1 and the UE 2 perform DualSteer.

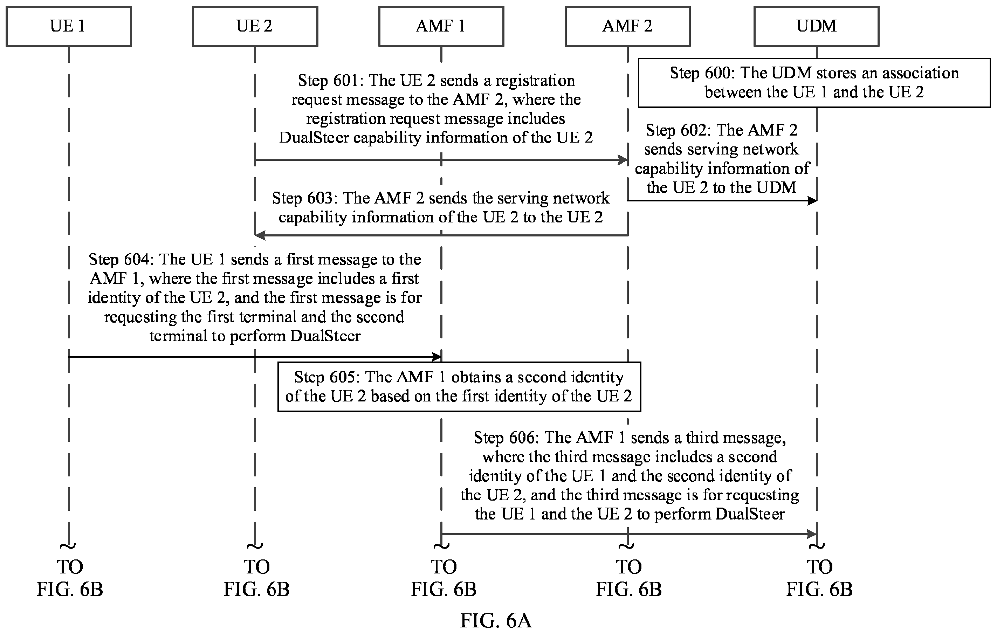

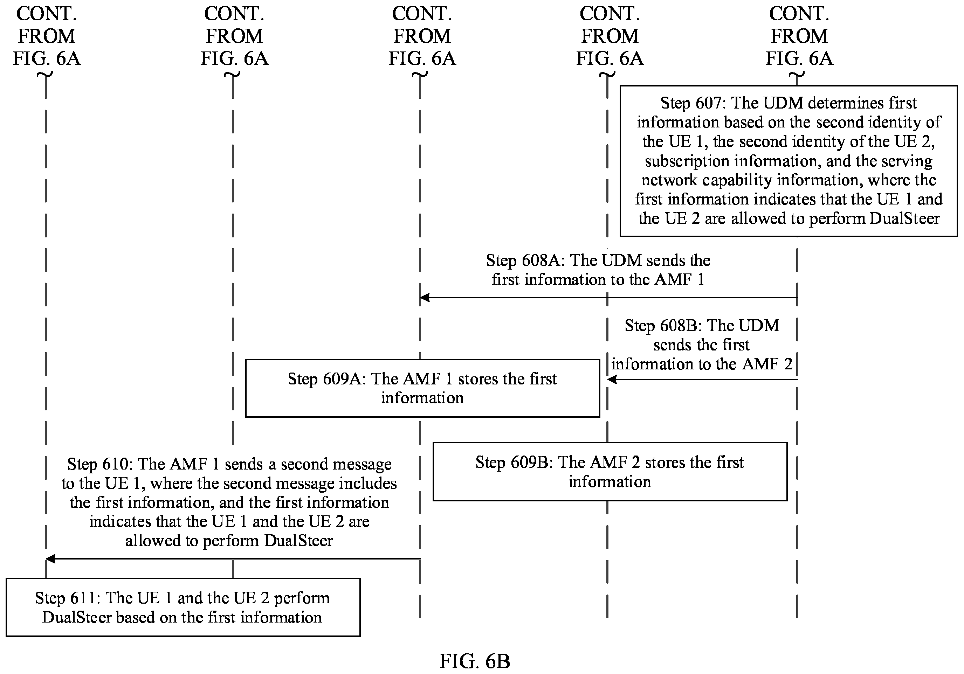

Refer to FIG. 6A and FIG. 6B. The following steps are performed.

An execution procedure of step 600 is the same as that of step 500. Details are not described herein, and reference may be made for understanding.

An execution procedure of step 601 is the same as that of step 501. Details are not described herein, and reference may be made for understanding.

Optionally, the following step 602 is performed, so that the UDM determines serving network capability information of the UE 1. For example, this step may not be performed in the example shown in FIG. 6A and FIG. 6B.

Step 602: The AMF 2 sends serving network capability information of the UE 2 to the UDM. Correspondingly, the UDM receives the serving network capability information from the AMF 2.

For example, if the AMF 2 supports DualSteer, the AMF 2 sends DualSteer support to the UE 2. For example, the AMF 2 may send a GUAMI to the UE 2, where the GUANI includes PLMN information. <GUAMI> :=<MCC> <MNC> <AMF Region ID> <AMF Set ID> <AMF Pointer>, where MCC and MNC indicate the PLMN information. The UE 1 may obtain the PLMN information by parsing the GUANI.

In addition, in step 602, the AMF 2 further sends a second identity (for example, an SUPI 2) of the UE 2 and an identifier of the AMF 2 to the UE 2.

An execution procedure of step 603 is the same as that of step 502. Details are not described herein, and reference may be made for understanding.

An execution procedure of step 604 to step 606 is the same as that of step 503 to step 505. Details are not described herein, and reference may be made for understanding.

Step 607: The UDM determines first information based on a second identity of the UE 1, the second identity of the UE 2, subscription information, and serving network capability information, where the first information indicates that the UE 1 and the UE 2 are allowed to perform DualSteer.

The first information may indicate that an association between the UE 1 and the UE 2 is authorized, or that the UE 1 and the UE 2 are authorized to perform DualSteer. The first information may be indicated by DualSteer authorized or DualSteer allowed. It should be noted that, the UDM may request a serving network capability of the UE 1 from the AMF 1, and the UDM may request a serving network capability of the UE 2 from the AMF 2; or the UDM preconfigures a serving network capability of the UE 1 and preconfigures a serving network capability of the UE 2.

In the embodiment in FIG. 6A and FIG. 6B, because the AMF 2 sends serving network capability information of the UE 2 to the UDM in step 602, the serving network capability information of the UE 2 may be obtained. In step 604, the UE 1 sends the first message to the AMF 1, and the AMF 1 can process the first message. In this case, it may be learned that a serving network of the UE 1 supports DualSteer.

An execution procedure of step 608A to step 610 is the same as that of step 507A to step 509. Details are not described herein, and reference may be made for understanding.

Step 611: The UE 1 and the UE 2 perform DualSteer based on the first information.

If the UE 1 receives DualSteer authorized, the first device may perform DualSteer.

In this embodiment, one UE in the first device initiates a DualSteer request, and the UDM determines the first information based on the subscription information (SUPI association) and serving networks of the two UEs both supporting DualSteer. The first device performs DualSteer only when the first information is obtained.

Case 3: The UE 1/UE 2 requests, from the UDM, the UE 1 and the UE 2 to perform DualSteer; and the UDM determines, based on serving network capability information supported by the UE 1/UE 2 and an association between the UE 1 and the UE 2, that the UE 1 and the UE 2 are not allowed to perform DualSteer.

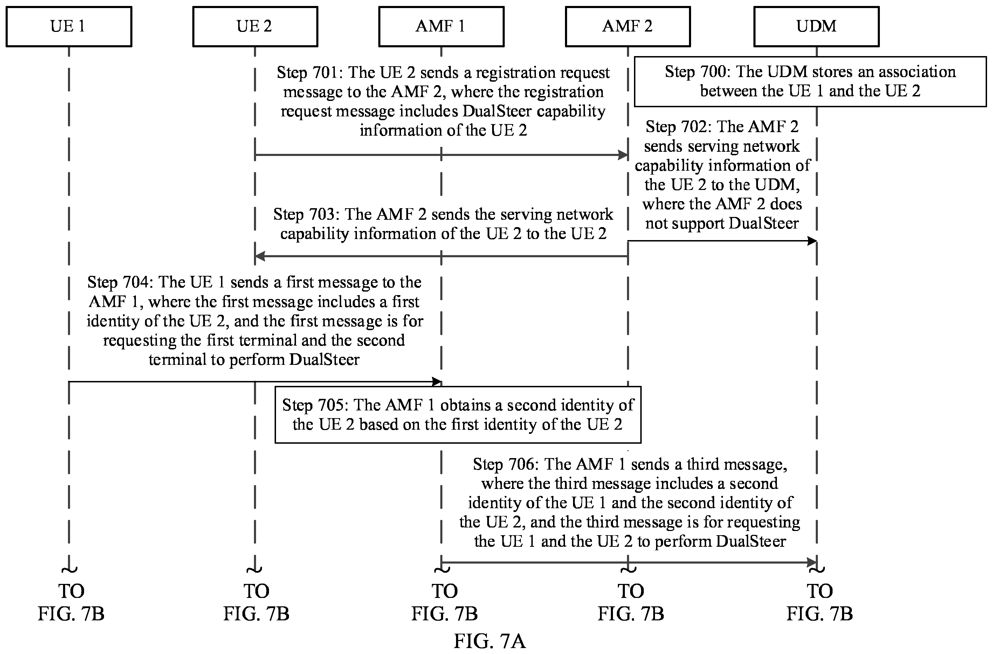

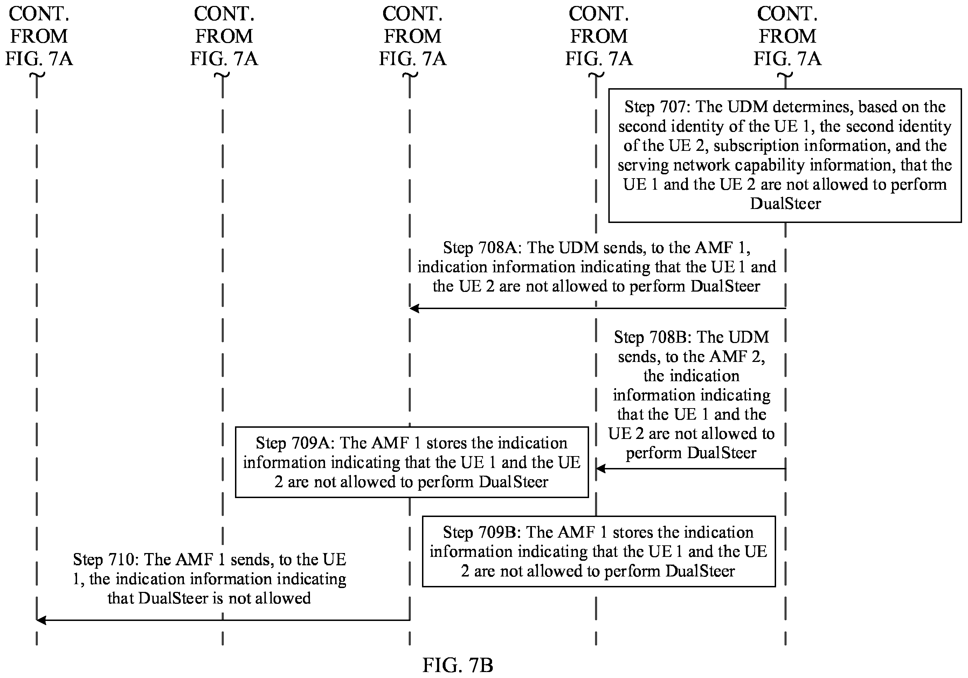

Refer to FIG. 7A and FIG. 7B. The following steps are performed.

An execution procedure of step 700 is the same as that of step 500 and that of step 600. Details are not described herein, and reference may be made for understanding.

An execution procedure of step 701 is the same as that of step 501 and that of step 601. Details are not described herein, and reference may be made for understanding.

Step 702: The AMF 2 sends serving network capability information of the UE 2 to the UDM, where the AMF 2 does not support DualSteer.

An execution procedure of step 703 is the same as that of step 502 and that of step 603. Details are not described herein, and reference may be made for understanding.

An execution procedure of step 704 to step 706 is the same as that of step 503 to step 505 and that of step 604 to step 606. Details are not described herein, and reference may be made for understanding.

Step 707: The UDM determines, based on a second identity of the UE 1, the second identity of the UE 2, subscription information, and serving network capability information, that the UE 1 and the UE 2 are not allowed to perform DualSteer.

It should be noted that, the UDM may request a serving network capability of the UE 1 from the AMF 1, and the UDM may request a serving network capability of the UE 2 from the AMF 2; or the UDM preconfigures a serving network capability of the UE 1 and preconfigures a serving network capability of the UE 2.

In the embodiment in FIG. 7A and FIG. 7B, because the AMF 2 sends the serving network capability information of the UE 2 to the UDM in step 702, it may be learned that the serving network capability information of the UE 2 is DualSteer Not Support. In step 704, the UE 1 sends the first message to the AMF 1, and the AMF 1 can process the first message. In this case, it may be learned that a serving network of the UE 1 supports DualSteer. Therefore, the UDM determines that the UE 1 and the UE 2 are not allowed to perform DualSteer.

Step 708A: The UDM sends, to the AMF 1, indication information (for example, DualSteer Not Support) indicating that the UE 1 and the UE 2 are not allowed to perform DualSteer. Correspondingly, the AMF 1 receives the indication information indicating that the UE 1 and the UE 2 are not allowed to perform DualSteer.

Step 708B: The UDM sends, to the AMF 2, the indication information (for example, DualSteer Not Support) indicating that the UE 1 and the UE 2 are not allowed to perform DualSteer. Correspondingly, the AMF 1 receives the indication information indicating that the UE 1 and the UE 2 are not allowed to perform DualSteer.

An execution sequence of step 708A and step 708B is not limited.

Optionally, the following step 709A and step 709B are performed.

Step 709A: The AMF 1 stores the indication information indicating that the UE 1 and the UE 2 are not allowed to perform DualSteer.

Step 709B: The AMF 2 stores the indication information indicating that the UE 1 and the UE 2 are not allowed to perform DualSteer.

An execution sequence of step 709A and step 709B is not limited.

Step 710: The AMF 1 sends, to the UE 1, the indication information indicating that DualSteer is not allowed.

Optionally, because a serving network of the UE 2 does not support DualSteer, based on triggering in step 710, the UE 2 may reselect a serving network that supports DualSteer, so that the UE 1 and the UE 2 perform DualSteer.

### Embodiment 2

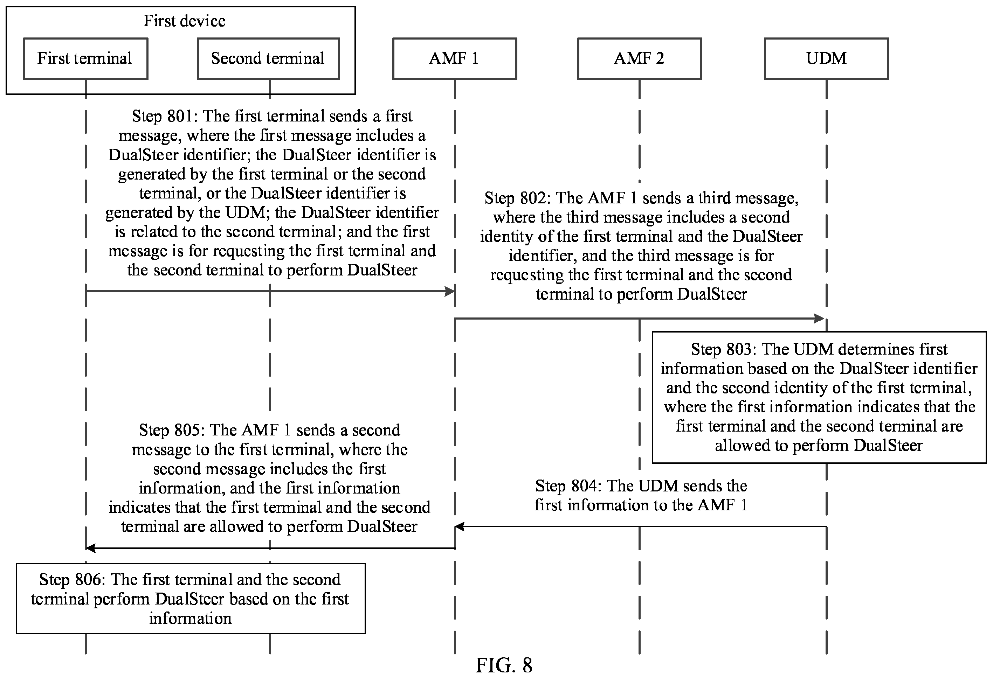

For example, in FIG. 8, a first terminal and a second terminal are located in a first device; a first network element is configured to perform access management of the first terminal, and the first network element is an AMF 1; a second network element is configured to perform access management of the second terminal, and the second network element is an AMF 2; and a third network element is a UDM, and the UDM is configured to manage data information of the second terminal and data information of the first terminal. The following steps are performed.

Step 801: The first terminal sends a first message, where the first message includes a DualSteer identifier; the DualSteer identifier is generated by the first terminal or the second terminal, or the DualSteer identifier is generated by the UDM; the DualSteer identifier is related to the second terminal; and the first message is for requesting the first terminal and the second terminal to perform DualSteer. Correspondingly, the AMF 1 receives the first message.

That the DualSteer identifier is related to the second terminal may be understood as that the DualSteer identifier is a temporary identifier of the second terminal or the DualSteer identifier is used to represent the second terminal.

That the first terminal sends the first message may be understood as that the first device sends the first message via the first terminal.

It should be noted that the first message may be a message of a new type, the first message is associated with DualSteer, and it may be determined, based on the first message, that DualSteer is requested to be performed. Alternatively, an existing NAS message is reused as the first message, and information like DualSteer request information is carried in the NAS message, so that a network element in a core network determines that DualSteer is to be performed. This is not specifically limited herein.

When the first device generates the DualSteer identifier, uniqueness in the first device should be ensured. Different first devices may generate different DualSteer identifiers. How to construct the DualSteer identifier is not specifically limited herein. For example, when the first device is in a DualSteer mode or the first device is allowed to perform DualSteer, the first device generates the DualSteer identifier. If the first terminal and the second terminal are not located in a same device, the DualSteer identifier may be generated by the first terminal or generated by the second terminal, or may be negotiated by the first terminal and the second terminal, and the DualSteer identifier may be shared between the first terminal and the second terminal. It should be understood that, in step 801, the DualSteer identifier is related to the second terminal, so that a second identity of the second terminal can be determined based on the DualSteer identifier.

The DualSteer identifier may alternatively be a DualSteer identifier received by the first device from the UDM, and the DualSteer identifier is allocated by the UDM. For example, when the AMF 2 sends, to the UDM, a request for the first terminal and the second terminal to perform DualSteer, or when the AMF 2 registers with the UDM, the UDM may generate the DualSteer identifier based on the DualSteer capability information of the second terminal and/or DualSteer subscription information of the second terminal, and send the DualSteer identifier to the UE 2 via the AMF 2. For example, when receiving the DualSteer capability information of the second terminal from the AMF 2, the UDM generates the DualSteer identifier for the second terminal. For another example, when the subscription information of the second terminal stored in the UDM includes DualSteer allowed, the UDM generates the DualSteer identifier for the second terminal. In addition, the UDM may further store a first association relationship between the DualSteer identifier and the second identity of the second terminal, so that when a DualSteer identifier from another terminal is received, an association between the another terminal and the second terminal can be created.

In addition, that the first message includes the DualSteer identifier may also be understood as that the first message includes a DualSteer request container and the DualSteer request container includes the DualSteer identifier.

In addition, the first message may further include first indication information, and the first indication information is for requesting the first terminal and the second terminal to perform DualSteer or requesting the first device to be in a DualSteer mode. The first indication information may be DualSteer request indication information (for example, a DualSteer request (DualSteer request), or an association request (Association request), or a DualSteer mode (DualSteer mode)). The first indication information may indicate, based on a parameter, for example, indicate, based on a parameter 1, to request the first terminal and the second terminal to perform DualSteer.

In addition, when the first message is a NAS message, the NAS message may be a registration request (Registration Request) message or a service request (Service Request) message, and the NAS message includes the first indication message and the DualSteer identifier. The NAS message may further include a PDU session establishment request (PDU Session establishment request) message of a UE 1. This is not specifically limited herein in this application.

It should be further noted that, in addition to the DualSteer identifier, the first message usually further includes a first identity of the first terminal.

Step 802: The AMF 1 sends a third message, where the third message includes a second identity of the first terminal and the DualSteer identifier, and the third message is for requesting the first terminal and the second terminal to perform DualSteer. Correspondingly, the UDM receives the third message.

In addition, when the first message includes the first indication information, the third message includes second indication information, and the second indication information is for requesting the first terminal and the second terminal to perform DualSteer. The second indication information may be the same as the first indication information. In addition to the first indication information, the second indication information may further include information added by the AMF 1, for example, a location of the first terminal. This is not specifically limited herein in this application.

If the DualSteer identifier is included in the DualSteer request container in the first message, the third message includes the second identity of the first terminal and the DualSteer request container. It should be understood that the AMF 1 receives the DualSteer request container via the first message, and then places the DualSteer request container in the third message. In this case, the AMF 1 does not need to process the DualSteer identifier, and only needs to forward the DualSteer request container.

Step 803: The UDM determines first information based on the DualSteer identifier and the second identity of the first terminal, where the first information indicates that the first terminal and the second terminal are allowed to perform DualSteer.

In an implementation, the UDM may determine the first information based on the second identity of the first terminal, the DualSteer identifier, and subscription information that are received from the AMF 1, where the subscription information is subscription information between the first terminal with a network and subscription information between the second terminal and the network, and the subscription information indicates that the second identity of the first terminal is associated with the second identity of the second terminal. For example, when the first terminal subscribes to an operator, a user to which the first terminal belongs is a user 1, and when the second terminal subscribes to the operator, a user to which the second terminal belongs is the user 1. In this case, the UDM may associate the second identity of the first terminal with the second identity of the second terminal. For another example, the first terminal and the second terminal belong to a same user. When the user subscribes to an operator, the operator may store the association between the second identity of the first terminal and the second identity of the second terminal. For another example, if subscription data of the first terminal includes the second identity of the second terminal, or subscription data of the second terminal includes the second identity of the first terminal, it is considered that the second identity of the first terminal is associated with the second identity of the second terminal.

In addition, after the UDM stores the first association relationship between the DualSteer identifier and the second identity of the second terminal, the UDM may determine the second identity of the second terminal based on the DualSteer identifier received from the AMF 1 and the first association relationship; and then determine, based on the subscription information, that the second identity of the first terminal is associated with the second identity of the second terminal, to obtain the first information.

In another implementation, the UDM may alternatively determine the first information based on the second identity of the first terminal, the DualSteer identifier, and serving network capability information that are received from the AMF 1, where the serving network capability information includes a serving network of the first terminal supporting DualSteer and/or a serving network of the second terminal supporting DualSteer. It should be noted that, the UDM may request a serving network capability of the first terminal from the AMF 1, and the UDM may request a serving network capability of the second terminal from the AMF 2; or the UDM preconfigures a serving network capability of the first terminal and preconfigures a serving network capability of the second terminal.

In the embodiment in FIG. 8, because the UDM receives the third message from the AMF 1, and the third message is for requesting the first terminal and the second terminal to perform DualSteer, it is considered that the AMF 1 supports DualSteer (that is, the serving network of the first terminal supports DualSteer). The UDM only needs to determine whether the serving network of the second terminal supports DualSteer. For example, the UDM may request, from the AMF 2, whether the serving network of the second terminal supports DualSteer. The AMF 2 may send fourth information to the UDM, where the fourth information may indicate that the serving network of the second terminal supports DualSteer.

In still another implementation, the UDM may alternatively determine the first information based on the second identity of the first terminal, the DualSteer identifier, subscription information, and serving network capability information that are received from the AMF 1. For example, the UDM may determine, based on the subscription information and the DualSteer identifier, that the second identity of the first terminal is associated with the second identity of the second terminal, and then determine the first information based on the serving network of the first terminal supporting DualSteer and the serving network of the second terminal supporting DualSteer.

It should be noted that the first information may indicate that an association between the first terminal and the second terminal is authorized, or that the first terminal and the second terminal are authorized to perform DualSteer, or that the first terminal and the second terminal are allowed to be in a DualSteer mode, or that the first device is allowed to be in a DualSteer mode. The first information may be indicated by DualSteer authorized or DualSteer allowed.

Optionally, the UDM determines fifth information based on the second identity of the first terminal and the DualSteer identifier, where the fifth information indicates that the first terminal and the second terminal are not allowed to perform DualSteer. Alternatively, the UDM may determine fifth information based on the second identity of the first terminal, the DualSteer identifier, and the subscription information.

Step 804: The UDM sends the first information to the AMF 1. Correspondingly, the AMF 1 receives the first information.

Refer to step 405 for understanding. Details are not described herein again.

Step 805: The AMF 1 sends a second message to the first terminal, where the second message includes the first information, and the first information indicates that the first terminal and the second terminal are allowed to perform DualSteer. Correspondingly, the first terminal receives the second message.

It should be noted that, if the UDM determines the fifth information based on the second identity of the first terminal, the DualSteer identifier, and the subscription information in step 803, the UDM sends the fifth information to the AMF 1 in step 804, the second message includes the fifth information in step 805, and the following step 806 is not performed.

That the first terminal receives the second message may be understood as that the first device receives the second message via the first terminal.

Step 806: The first terminal and the second terminal perform DualSteer based on the first information.

It should be noted that, when the first terminal and the second terminal determine that the serving network of the first terminal supports DualSteer and the serving network of the second terminal supports DualSteer, the first terminal and the second terminal may directly perform DualSteer based on the first information.

That the first terminal and the second terminal perform DualSteer based on the first information may be understood as that the first device performs DualSteer for the first terminal and the second terminal based on the first information, or the first device performs DualSteer based on the first information, where the DualSteer is used for the first terminal and the second terminal.

In an optional implementation, the first terminal and the second terminal perform DualSteer based on the serving network capability information and the first information. In other words, the first terminal needs to obtain serving network capability information of the first terminal, and the second terminal needs to obtain serving network capability information of the second terminal. For example, before step 801 is performed, the first terminal may register DualSteer capability information of the first terminal with the AMF 1, and the AMF 1 may feed back, to the first terminal, whether the serving network of the first terminal supports DualSteer. The second terminal may register DualSteer capability information of the second terminal with the AMF 2, and the AMF 2 may feed back, to the second terminal, whether the serving network of the second terminal supports DualSteer. In this case, the first terminal determines that the serving network of the first terminal supports DualSteer, and the second terminal determines that the serving network of the second terminal supports DualSteer. Alternatively, before step 806 is performed, the first terminal requests the serving network capability information of the first terminal from the AMF 1, and receives second information from the AMF 1, where the second information indicates that the serving network of the first terminal supports DualSteer; and the second terminal requests the serving network capability information of the second terminal from the AMF 2, and receives third information from the AMF 2, where the third information indicates that the serving network of the second terminal supports DualSteer. Alternatively, the first device requests the serving network capability information of the first terminal from the AMF 1 via the first terminal, and the first device receives second information from the AMF 1 via the first terminal; and the first device requests the serving network capability information of the second terminal from the AMF 2 via the second terminal, and the first device receives third information from the AMF 2 via the second terminal.

Optionally, after step 806, if a terminal in the first device changes, for example, the first device includes the second terminal and a third terminal, the first device needs to request the second terminal and the third terminal to perform DualSteer, and then determine, based on an authorization result sent via the network (for example, the second terminal and the third terminal are allowed to perform DualSteer, or the second terminal and the third terminal are not allowed to perform DualSteer), whether to perform DualSteer. If the second terminal and the third terminal are allowed to perform DualSteer, the first device performs DualSteer; or if the second terminal and the third terminal are not allowed to perform DualSteer, the first device does not perform DualSteer.

It should be noted that, message/information transmission between the terminal and the network element and between the network elements may be direct transmission, or may be indirect transmission via another network element or device. This is not specifically limited herein in this application. For example, that the first terminal transmits the first message to the AMF 1 may be understood as that the first terminal transmits the first message to the AMF 1 via a RAN 1, or may be understood as that the first terminal directly transmits the first message to the AMF 1. That the third message is transmitted between the AMF 1 and the UDM may be understood as that the AMF 1 transmits the third message to the UDM via an SMF or the AMF 1 directly transmits the third message to the UDM. This is merely an example for description herein.

In this application, the third network element receives the third message, from the first network element, for requesting the first terminal and the second terminal to perform DualSteer, where the third message includes the second identity of the first terminal and the DualSteer identifier; the third network element determines the first information based on the second identity of the first terminal and the DualSteer identifier; and then, the third network element sends the first information to the first network element. In this way, the first network element may determine that the first terminal and the second terminal are allowed to perform DualSteer. Using the DualSteer identifier can avoid using a first identity of the second terminal, thereby helping protect information about the second terminal.

The following describes the solution in Embodiment 2 through data exchange between the UE 1 (namely, the first terminal), a UE 2 (namely, the second terminal), the AMF 1 (namely, the first network element), the AMF 2 (namely, the second network element), and the UDM (namely, the third network element). Details are as follows.

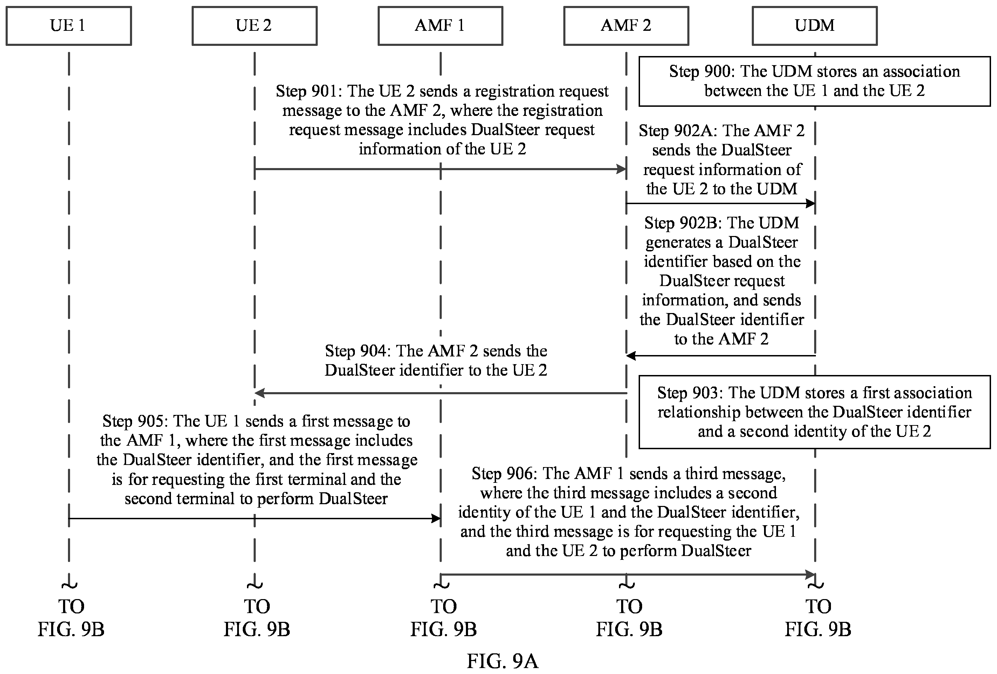

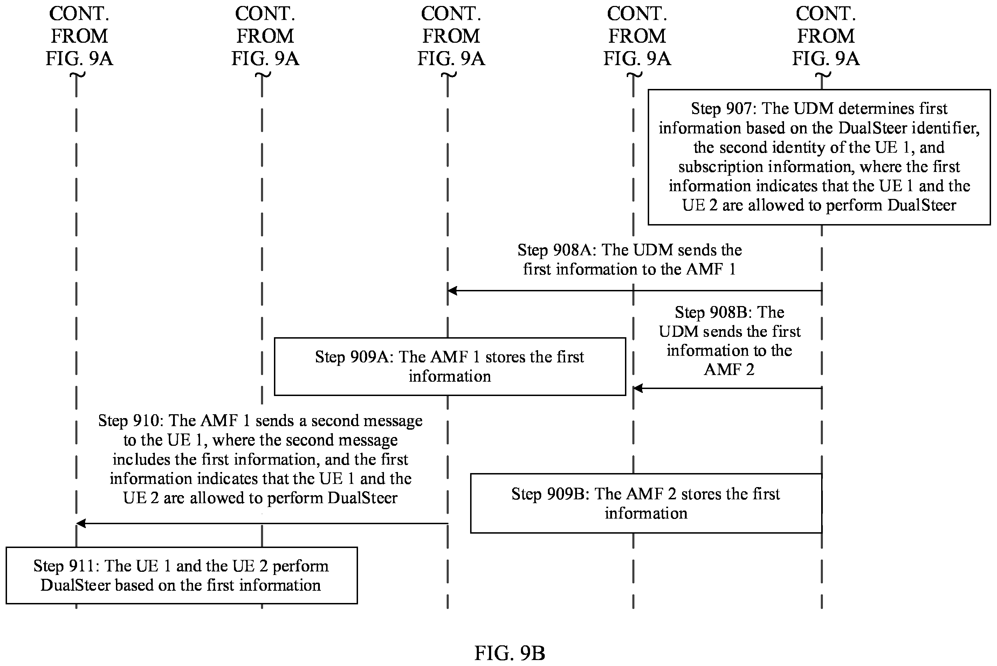

Refer to FIG. 9A and FIG. 9B. The following steps are performed.

Step 900: The UDM stores an association between the UE 1 and the UE 2.

For example, an association between a second identity (SUPI 1) of the UE 1 and a second identity (SUPI 2) of the UE 2 is stored. It should be understood that, in a process in which an operator registers the UEs, the two UEs are associated (for example, both the UE 1 and the UE 2 belong to a same user). Therefore, the UDM may store an association relationship between the SUPI 1 and the SUPI 2.

Step 901: The UE 2 sends a registration request message to the AMF 2, where the registration request message includes DualSteer request information (DualSteer request or DualSteer mode) of the UE 2. Correspondingly, the AMF 2 receives the registration request message.

For example, if the UE 2 supports DualSteer, the registration request message may carry DualSteer support.

In addition, the registration request message may further carry a first identity of the UE 2, for example, a SUCI 2 or a 5G-GUTI 2.

Step 902A: The AMF 2 sends the DualSteer request information (DualSteer request or DualSteer mode) of the UE 2 to the UDM. Correspondingly, the UDM receives the DualSteer request information of the UE 2.

In addition, in step 902, the AMF 2 further sends the second identity (for example, the SUPI 2) of the UE 2 and an identifier of the AMF 2 to the UE 2.

Step 902B: The UDM generates a DualSteer identifier based on the DualSteer request information, and sends the DualSteer identifier to the AMF 2. Correspondingly, the AMF 2 receives the DualSteer identifier.

Step 903: The UDM stores a first association relationship between the DualSteer identifier and the second identity of the UE 2.

Step 904: The AMF 2 sends the DualSteer identifier to the UE 2. Correspondingly, the UE 2 receives the DualSteer identifier, and shares the DualSteer identifier with the UE 1.

Optionally, the AMF 2 further sends serving network capability information of the UE 2 to the UE 2 in step 904. For example, if the AMF 2 supports DualSteer, the AMF 2 sends DualSteer support to the UE 2.

Step 905: The UE 1 sends a first message to the AMF 1, where the first message includes the DualSteer identifier, and the first message is for requesting the first terminal and the second terminal to perform DualSteer. Correspondingly, the AMF 1 receives the first message.

For example, the first message may directly include the DualSteer identifier, or may include a DualSteer request container, where the DualSteer identifier is carried in the DualSteer request container. Refer to the description in step 801 for understanding. Details are not described herein again.

Optionally, the first message further includes first indication information, and the first indication information is for requesting the UE 1 and the UE 2 to perform DualSteer. The first indication information may be DualSteer request (DualSteer request or Association request) indication information.

Optionally, the first message may be a NAS message. The NAS message may be a registration request (Registration Request) message or a service request (Service Request) message, and the NAS message includes the first indication message and the DualSteer identifier. When the NAS message is a registration request message, the NAS message may further include capability information of the UE 2.

Optionally, the NAS message may further include a PDU session establishment request (PDU establishment request) message of the UE 1. This is not specifically limited herein in this application.

It should be noted that the first message usually further includes a first identity of the first terminal.

It should be further noted that step 905 is performed only when a serving network of the UE 1 supports DualSteer and a serving network of the UE 2 also supports DualSteer. In addition, when the serving network of the UE 2 supports DualSteer, whether the serving network of the UE 2 supports DualSteer does not need to be determined. Because the AMF 2 can process the first message from the UE 2, it is considered by default that the serving network of the UE 2 supports DualSteer.

In addition, when the UE 1 and the UE 2 are located in the first device, step 905 is performed only when the first device enables a DualSteer mode (DualSteer mode) (that is, a mode in which service data is transmitted in a DualSteer manner is used).

Step 906: The AMF 1 sends a third message, where the third message includes the second identity of the UE 1 (the second identity of the UE 1 is obtained by searching context of the UE 1) and the DualSteer identifier, and the third message is for requesting the UE 1 and the UE 2 to perform DualSteer. Correspondingly, the UDM receives the third message.

In addition, when the first message includes the first indication information, the third message includes second indication information, and the second indication information is for requesting the first terminal and the second terminal to perform DualSteer. Refer to the description in step 802 for understanding. Details are not described herein again.

Step 907: The UDM determines first information based on the DualSteer identifier, the second identity of the UE 1, and subscription information, where the first information indicates that the UE 1 and the UE 2 are allowed to perform DualSteer.

The first information may indicate that the association between the UE 1 and the UE 2 is authorized, or that the UE 1 and the UE 2 are authorized to perform DualSteer. The first information may be indicated by DualSteer authorized or DualSteer allowed. Refer to step 803 for understanding. Details are not described herein again.

Step 908A: The UDM sends the first information to the AMF 1. Correspondingly, the AMF 1 receives the first information.

Step 908B: The UDM sends the first information to the AMF 2. Correspondingly, the AMF 1 receives the first information.

An execution sequence of step 908A and step 908B is not limited.

Step 909A: The AMF 1 stores the first information.

The AMF 1 stores the first information, to determine that the UE 1 is allowed to request to perform DualSteer (that is, create a DualSteer session).

Step 909B: The AMF 2 stores the first information.

Refer to the description in step 508B for understanding. Details are not described herein again.

An execution sequence of step 909A and step 909B is not limited.

Step 910: The AMF 1 sends a second message to the UE 1, where the second message includes the first information, and the first information indicates that the UE 1 and the UE 2 are allowed to perform DualSteer. Correspondingly, the UE 1 receives the second message.

Step 911: The UE 1 and the UE 2 perform DualSteer based on the first information.

In the embodiment in FIG. 9A and FIG. 9B, because the AMF 2 sends the serving network capability information of the UE 2 to the UE 2 in step 904, the serving network capability information of the UE 2 may be obtained. In step 905, the UE 1 sends the first message to the AMF 1, and the AMF 1 can process the first message. In this case, it may be learned that the serving network of the UE 1 supports DualSteer. Therefore, step 910 is performed only when the UE 1 receives the first information and it is determined that both the serving network of the UE 1 and the serving network of the UE 2 support DualSteer.

Optionally, if the UE 1 receives DualSteer unauthorized or fails to receive DualSteer authorized, the first device (when the UE 1 and the UE 2 are located in the first device) may be in an MUSIM mode (a mode in which service data is transmitted in a DualSteer manner is not used); or if the UE 1 receives DualSteer authorized, the first device may be in the DualSteer mode.

In this embodiment, when one UE initiates a DualSteer request, the DualSteer identifier is carried, and the UDM determines the first information based on the subscription information (SUPI association) and the DualSteer identifier. The two UEs perform DualSteer only when the first information is obtained and the serving networks of the two UEs both support DualSteer.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

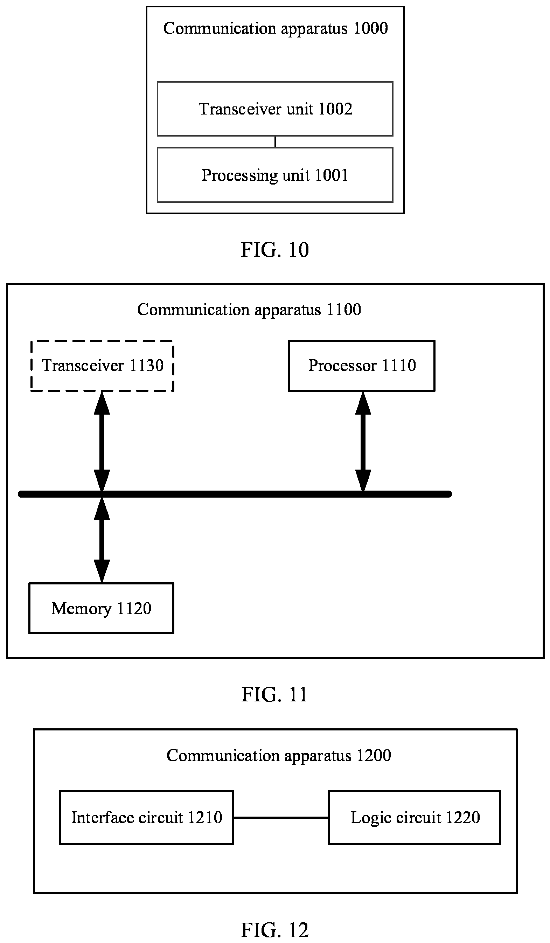

When an integrated unit is used, FIG. 10 is a block diagram of a possible example of a communication apparatus according to an embodiment of this application. As shown in FIG. 10, the communication apparatus 1000 may include a processing unit 1001 and a transceiver unit 1002. The processing unit 1001 is configured to control and manage an action of the communication apparatus 1000. The transceiver unit 1002 is configured to support communication between the communication apparatus 1000 and another device. Optionally, the transceiver unit 1002 may include a receiving unit and/or a sending unit, respectively configured to perform a receiving operation and a sending operation. Optionally, the communication apparatus 1000 may further include a storage unit, configured to store program code and/or data of the communication apparatus 1000. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. For example, the apparatus may be the foregoing terminal, a network device, or the like.

In an embodiment, the communication apparatus 1000 is a first device. The transceiver unit 1002 is configured to: send a first message, where the first message is for requesting a first terminal and a second terminal to perform DualSteer; and receive a second message, where the second message includes first information, and the first information indicates that the first terminal and the second terminal are allowed to perform DualSteer. The processing unit 1001 is configured to perform DualSteer based on the first information.

In an optional implementation, the processing unit 1001 is specifically configured to perform DualSteer based on serving network capability information and the first information, where the serving network capability information includes a serving network of the first terminal supporting DualSteer and/or a serving network of the second terminal supporting DualSteer.

In an optional implementation, the transceiver unit 1002 is further configured to: receive second information from a first network element, where the second information indicates that the serving network of the first terminal supports DualSteer, and the first network element is configured to perform access management of the first terminal; and/or receive third information from a second network element, where the third information indicates that the serving network of the second terminal supports DualSteer, and the second network element is configured to perform access management of the second terminal.

In an optional implementation, the first message is sent by the first terminal, and the first message includes a first identity of the second terminal.

In an optional implementation, the first message is sent by the first terminal; the first message includes a DualSteer identifier; the DualSteer identifier is generated by the first device, or the DualSteer identifier is generated by a third network element (UDM); the third network element is configured to manage data information of the second terminal; and the DualSteer identifier is associated with the second terminal.

In an optional implementation, that the first message includes the DualSteer identifier includes:

The first message includes a DualSteer request container, and the DualSteer request container includes the DualSteer identifier.

In an optional implementation, the first message includes first indication information, and the first indication information is for requesting the first terminal and the second terminal to perform DualSteer.

In an optional implementation, the DualSteer identifier is generated by the third network element, and the transceiver unit 1002 is further configured to receive the DualSteer identifier from the third network element.

In another embodiment, the communication apparatus 1000 is a third network element. The transceiver unit 1002 is configured to receive a third message from a first network element, where the third message includes a second identity of a first terminal and a second identity of a second terminal, the first network element is configured to perform access management of the first terminal, and the third message is for requesting the first terminal and the second terminal to perform DualSteer. The processing unit 1001 is configured to determine first information based on the second identity of the first terminal and the second identity of the second terminal, where the first information indicates that the first terminal and the second terminal are allowed to perform DualSteer. The transceiver unit 1002 is further configured to send the first information to the first network element.

In an optional implementation, the processing unit 1001 is specifically configured to determine the first information based on the second identity of the first terminal, the second identity of the second terminal, and subscription information, where the subscription information indicates that the first terminal is associated with the second terminal.

In an optional implementation, the processing unit 1001 is specifically configured to determine the first information based on the second identity of the first terminal, the second identity of the second terminal, and serving network capability information, where the serving network capability information includes a serving network of the first terminal supporting DualSteer and/or a serving network of the second terminal supporting DualSteer.

In an optional implementation, when the serving network capability information includes the serving network of the second terminal supporting DualSteer, the transceiver unit 1002 is further configured to receive fourth information from a second network element, where the fourth information indicates that the serving network of the second terminal supports DualSteer.

In an optional implementation, the third message further includes second indication information, and the second indication information is for requesting the first terminal and the second terminal to perform DualSteer.

In an optional implementation, the transceiver unit 1002 is further configured to send the first information to the second network element, where the second network element is configured to perform access management of the second terminal.

In still another embodiment, the communication apparatus 1000 is a third network element. The transceiver unit 1002 is configured to receive a third message from a first network element, where the third message includes a DualSteer identifier and a second identity of a first terminal; the DualSteer identifier is generated by the first terminal or a second terminal, or the DualSteer identifier is generated by the third network element; the first network element is configured to perform access management of the first terminal; the DualSteer identifier is related to the second terminal; and the third message is for requesting the first terminal and the second terminal to perform DualSteer. The processing unit 1001 is configured to determine first information based on the DualSteer identifier and the second identity of the first terminal, where the first information indicates that the first terminal and the second terminal are allowed to perform DualSteer. The transceiver unit 1002 is further configured to send the first information to the first network element.

In an optional manner, the processing unit 1001 is further configured to: generate the DualSteer identifier based on DualSteer capability information of the second terminal and/or DualSteer subscription information of the second terminal, and send the DualSteer identifier to a second network element, where the second network element is configured to perform access management of the second terminal.

In an optional implementation, the processing unit 1001 is further configured to store a first association relationship between the DualSteer identifier and a second identity of the second terminal.

In an optional implementation, the processing unit 1001 is further configured to determine the first information based on the DualSteer identifier, the second identity of the first terminal, and subscription information, where the subscription information indicates that the first terminal is associated with the second terminal.

In an optional implementation, the processing unit 1001 is further configured to determine the first information based on the DualSteer identifier, the second identity of the first terminal, and serving network capability information, where the serving network capability information includes a serving network of the first terminal supporting DualSteer and/or a serving network of the second terminal supporting DualSteer.

In an optional implementation, when the serving network capability information includes the serving network of the second terminal supporting DualSteer, the transceiver unit 1002 is further configured to receive fourth information from a second network element, where the fourth information indicates that the serving network of the second terminal supports DualSteer.

In an optional implementation, the third message further includes second indication information, and the second indication information is for requesting the first terminal and the second terminal to perform DualSteer.

In an optional implementation, the transceiver unit 1002 is further configured to send the first information to the second network element, where the second network element is configured to perform access management of the second terminal.

In yet another embodiment, the communication apparatus is a first network element. The transceiver unit 1002 is configured to receive a first message from a first terminal, where the first message includes a first identity of a second terminal, and the first message is for requesting the first terminal and the second terminal to perform DualSteer. The processing unit 1001 is configured to obtain a second identity of the second terminal based on the first identity of the second terminal. The transceiver unit 1002 is further configured to: send a third message, where the third message includes a second identity of the first terminal and the second identity of the second terminal; and receive first information, where the first information indicates that the first terminal and the second terminal are allowed to perform DualSteer.

In an optional implementation, the transceiver unit 1002 is configured to: send the first identity of the second terminal to a fourth network element or a second network element, where the fourth network element is configured to perform authentication management of the second terminal, and the second network element is configured to perform access management of the second terminal; and receive the second identity of the second terminal from the fourth network element or the second network element.

In an optional implementation, the processing unit 1001 is further configured to store the first information.

In an optional implementation, the processing unit 1001 is further configured to: obtain DualSteer policy information based on the first information, and send the DualSteer policy information to the first terminal.

In an optional implementation, the transceiver unit 1002 is further configured to: send a policy request message to a fifth network element, where the policy request message includes third indication information, the third indication information is for requesting the policy information for the first terminal and the second terminal to perform DualSteer, and the fifth network element is configured to perform policy management of the first terminal; and receive the DualSteer policy information from the fifth network element.

In an optional implementation, the processing unit 1001 is further configured to determine, based on the first information, that the first terminal is allowed to establish a DualSteer session.

In an optional implementation, the first message further includes first indication information, the first indication information is for requesting the first terminal and the second terminal to perform DualSteer, the third message further includes second indication information, and the first indication information is for requesting the first terminal and the second terminal to perform DualSteer.

In still yet another embodiment, the communication apparatus is a first network element. The transceiver unit 1002 is configured to: receive a first message from a first terminal, where the first message includes a DualSteer identifier; the DualSteer identifier is generated by the first terminal or a second terminal, or the DualSteer identifier is generated by a third network element; the third network element is configured to manage data information of the second terminal; the DualSteer identifier is related to the second terminal; and the first message is for requesting the first terminal and the second terminal to perform DualSteer; send a third message, where the third message includes a second identity of the first terminal and the DualSteer identifier; and receive first information, where the first information indicates that the first terminal and the second terminal are allowed to perform DualSteer.

In an optional implementation, that the first message includes the DualSteer identifier includes: The first message includes a DualSteer request container, and the DualSteer request container includes the DualSteer identifier.

In an optional implementation, the processing unit 1002 is configured to store the first information.

In an optional implementation, the processing unit 1002 is further configured to: obtain DualSteer policy information based on the first information, and send the DualSteer policy information to the first terminal.

In an optional implementation, the transceiver unit 1001 is further configured to: send a policy request message to a fifth network element, where the policy request message includes third indication information, the third indication information is for requesting the policy information for the first terminal and the second terminal to perform DualSteer, and the fifth network element is configured to perform policy management of the first terminal; and receive the DualSteer policy information from the fifth network element.

In an optional implementation, the processing unit 1002 is further configured to determine, based on the first information, that the first terminal is allowed to establish a DualSteer session.

In an optional implementation, the first message further includes first indication information, the first indication information is for requesting the first terminal and the second terminal to perform DualSteer, the third message further includes second indication information, and the first indication information is for requesting the first terminal and the second terminal to perform DualSteer.

FIG. 11 shows a communication apparatus 1100 further provided in this application. The communication apparatus 1100 may be a chip or a chip system. The communication apparatus may be located in a device in any one of the foregoing method embodiments, for example, an access network device or a first core network device, to perform an action corresponding to the device.

Optionally, the chip system may include a chip, or may include a chip and another discrete device.

The communication apparatus 1100 includes a processor 1110.

The processor 1110 is configured to execute a computer program stored in a memory 1120, to implement an action of each device in any one of the foregoing method embodiments.

The communication apparatus 1100 may further include the memory 1120, configured to store the computer program.

Optionally, the memory 1120 is coupled to the processor 1110. Coupling may be indirect coupling or a communication connection between apparatuses, units, or modules in an electrical form, a mechanical form, or another form, and is used for information exchange between the apparatuses, the units, or the modules. Optionally, the memory 1120 and the processor 1110 are integrated together.

There may be one or more processors 1110 and one or more memories 1120. This is not limited.

Optionally, during actual application, the communication apparatus 1100 may include or may not include a transceiver 1130. A dashed box is used for illustration in the figure. The communication apparatus 1100 may exchange information with another device through the transceiver 1130. The transceiver 1130 may be a circuit, a bus, a transceiver, or any other apparatus that may be configured to exchange information.

A specific connection medium between the transceiver 1130, the processor 1110, and the memory 1120 is not limited in embodiments of this application. In this embodiment of this application, in FIG. 11, the memory 1120, the processor 1110, and the transceiver 1130 are connected to each other through a bus. The bus is represented by a thick line in FIG. 11. A manner of connection between other components is merely described as an example, but is not limited thereto. The bus may be classified into an address bus, a data bus, a control bus, or the like. For ease of representation, only one thick line is used for representing the bus in FIG. 11, but this does not mean that there is only one bus or only one type of bus. In embodiments of this application, the processor may be a general-purpose processor, a digital signal processor, an application-specific integrated circuit, a field-programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor, any conventional processor, or the like. The steps in the methods disclosed with reference to embodiments of this application may be directly performed and completed by a hardware processor, or may be performed and completed by a combination of hardware and software modules in the processor.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of instructions or a data structure and that can be accessed by a computer. However, this is not limited thereto. The memory in embodiments of this application may alternatively be a circuit or any other apparatus that can implement a storage function, and is configured to store a computer program, program instructions, and/or data.

Based on the foregoing embodiments, as shown in FIG. 12, an embodiment of this application further provides another communication apparatus 1200, including an interface circuit 1210 and a logic circuit 1220. The interface circuit 1210 may be understood as an input/output interface, and may be configured to perform receiving and sending steps of each device in any one of the foregoing method embodiments. The logic circuit 1220 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, such as a USB flash drive, a removable hard disk drive, a read-only memory, a random access memory, a magnetic disk, or an optical disc.

Based on the foregoing embodiments, an embodiment of this application provides a communication system. The communication system includes the first device (the first terminal and the second terminal), the first network element, the second network element, the third network element, the fourth network element, the fifth network element, and the like that are mentioned in any one of the foregoing method embodiments, and may be configured to perform the method performed by each device in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, and an optical memory) that include computer-usable program code.

This application is described with reference to the flowcharts and/or the block diagrams of the methods, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by the computer or the processor of the another programmable data processing apparatus generate an apparatus for implementing a specific function in one or more procedures in the flowcharts and/or in one or more blocks in the block diagrams.

These computer program instructions may be alternatively stored in a computer-readable memory that can indicate the computer or another programmable data processing apparatus to operate in a specific manner, so that the instructions stored in the computer-readable memory generate an artifact that includes an instruction apparatus. The instruction apparatus implements a specific function in one or more procedures in the flowcharts and/or in one or more blocks in the block diagrams.

These computer program instructions may alternatively be loaded onto a computer or another programmable data processing apparatus, so that a series of operation steps are performed on the computer or the another programmable apparatus to generate computer-implemented processing. Therefore, the instructions executed on the computer or the another programmable apparatus provide steps for implementing a specific function in one or more procedures in the flowcharts and/or in one or more blocks in the block diagrams.

## Claims

1. A communication method, applied to a first device, wherein the first device comprises a first terminal and a second terminal, and the method comprises:
sending a first message, wherein the first message is for requesting the first terminal and the second terminal to perform DualSteer;
receiving a second message, wherein the second message comprises first information, and the first information indicates that the first terminal and the second terminal are allowed to perform DualSteer; and
performing DualSteer based on the first information.

2. The method according to claim 1, wherein performing DualSteer based on the first information comprises:
performing DualSteer based on serving network capability information and the first information, wherein the serving network capability information comprises a serving network of the first terminal supporting DualSteer and/or a serving network of the second terminal supporting DualSteer.

3. The method according to claim 2, wherein the method further comprises:
receiving second information from a first network element, wherein the second information indicates that the serving network of the first terminal supports DualSteer, and the first network element is configured to perform access management of the first terminal; and/or
receiving third information from a second network element, wherein the third information indicates that the serving network of the second terminal supports DualSteer, and the second network element is configured to perform access management of the second terminal.

4. The method according to any one of claims 1 to 3, wherein the first message is sent by the first terminal, and the first message comprises a first identity of the second terminal.

5. The method according to any one of claims 1 to 3, wherein the first message is sent by the first terminal; the first message comprises a DualSteer identifier; the DualSteer identifier is generated by the first device, or the DualSteer identifier is generated by a third network element; the third network element is configured to manage data information of the second terminal; and the DualSteer identifier is associated with the second terminal.

6. The method according to claim 5, wherein that the first message comprises the DualSteer identifier comprises:
the first message comprises a DualSteer request container, and the DualSteer request container comprises the DualSteer identifier.

7. The method according to any one of claims 1 to 6, wherein the first message comprises first indication information, and the first indication information is for requesting the first terminal and the second terminal to perform DualSteer.

8. The method according to claim 5 or 6, wherein the DualSteer identifier is generated by the third network element, and the method further comprises:
receiving the DualSteer identifier from the third network element.

9. A communication method, applied to a third network element, wherein the method comprises:
receiving a third message from a first network element, wherein the third message comprises a second identity of a first terminal and a second identity of a second terminal, the first network element is configured to perform access management of the first terminal, and the third message is for requesting the first terminal and the second terminal to perform DualSteer;
determining first information based on the second identity of the first terminal and the second identity of the second terminal, wherein the first information indicates that the first terminal and the second terminal are allowed to perform DualSteer; and
sending the first information to the first network element.

10. The method according to claim 9, wherein determining the first information based on the second identity of the first terminal and the second identity of the second terminal comprises:
determining the first information based on the second identity of the first terminal, the second identity of the second terminal, and subscription information, wherein the subscription information indicates that the first terminal is associated with the second terminal.

11. The method according to claim 9 or 10, wherein determining the first information based on the second identity of the first terminal and the second identity of the second terminal comprises:
determining the first information based on the second identity of the first terminal, the second identity of the second terminal, and the serving network capability information, wherein the serving network capability information comprises a serving network of the first terminal supporting DualSteer and/or a serving network of the second terminal supporting DualSteer.

12. The method according to claim 11, wherein when the serving network capability information comprises the serving network of the second terminal supporting DualSteer, the method further comprises:
receiving fourth information from a second network element, wherein the fourth information indicates that the serving network of the second terminal supports DualSteer.

13. The method according to any one of claims 9 to 12, wherein the third message further comprises second indication information, and the second indication information is for requesting the first terminal and the second terminal to perform DualSteer.

14. The method according to any one of claims 9 to 13, wherein the method further comprises:
sending the first information to the second network element, wherein the second network element is configured to perform access management of the second terminal.

15. A communication method, applied to a third network element, wherein the method comprises:
receiving a third message from a first network element, wherein the third message comprises a DualSteer identifier and a second identity of a first terminal; the DualSteer identifier is generated by the first terminal or a second terminal, or the DualSteer identifier is generated by the third network element; the first network element is configured to perform access management of the first terminal; the DualSteer identifier is related to the second terminal; and the third message is for requesting the first terminal and the second terminal to perform DualSteer;
determining first information based on the DualSteer identifier and the second identity of the first terminal, wherein the first information indicates that the first terminal and the second terminal are allowed to perform DualSteer; and
sending the first information to the first network element.

16. The method according to claim 15, wherein the method further comprises:
generating the DualSteer identifier based on DualSteer capability information of the second terminal and/or DualSteer subscription information of the second terminal; and
sending the DualSteer identifier to a second network element, wherein the second network element is configured to perform access management of the second terminal.

17. The method according to claim 15 or 16, wherein the method further comprises:
storing a first association relationship between the DualSteer identifier and a second identity of the second terminal.

18. The method according to any one of claims 15 to 17, wherein determining the first information based on the DualSteer identifier and the second identity of the first terminal comprises:
determining the first information based on the DualSteer identifier, the second identity of the first terminal, and subscription information, wherein the subscription information indicates that the first terminal is associated with the second terminal.

19. The method according to any one of claims 15 to 18, wherein determining the first information based on the DualSteer identifier and the second identity of the first terminal comprises:
determining the first information based on the DualSteer identifier, the second identity of the first terminal, and the serving network capability information, wherein the serving network capability information comprises a serving network of the first terminal supporting DualSteer and/or a serving network of the second terminal supporting DualSteer.

20. The method according to claim 19, wherein when the serving network capability information comprises the serving network of the second terminal supporting DualSteer, the method further comprises:
receiving fourth information from the second network element, wherein the fourth information indicates that the serving network of the second terminal supports DualSteer.

21. The method according to any one of claims 15 to 20, wherein the third message further comprises second indication information, and the second indication information is for requesting the first terminal and the second terminal to perform DualSteer.

22. The method according to any one of claims 15 to 21, wherein the method further comprises:
sending the first information to the second network element, wherein the second network element is configured to perform access management of the second terminal.

23. A communication method, applied to a first network element, wherein the method comprises:
receiving a first message from a first terminal, wherein the first message comprises a first identity of a second terminal, and the first message is for requesting the first terminal and the second terminal to perform DualSteer;
obtaining a second identity of the second terminal based on the first identity of the second terminal;
sending a third message, wherein the third message comprises a second identity of the first terminal and the second identity of the second terminal; and
receiving first information, wherein the first information indicates that the first terminal and the second terminal are allowed to perform DualSteer.

24. The method according to claim 23, wherein obtaining the second identity of the second terminal based on the first identity of the second terminal comprises:
sending the first identity of the second terminal to a fourth network element or a second network element, wherein the fourth network element is configured to perform authentication management of the second terminal, and the second network element is configured to perform access management of the second terminal; and
receiving the second identity of the second terminal from the fourth network element or the second network element.

25. The method according to claim 23 or 24, wherein the method further comprises: storing the first information.

26. The method according to any one of claims 23 to 25, wherein the method further comprises:
obtaining DualSteer policy information based on the first information; and
sending the DualSteer policy information to the first terminal.

27. The method according to claim 26, wherein obtaining the DualSteer policy information comprises:
sending a policy request message to a fifth network element, wherein the policy request message comprises third indication information, the third indication information is for requesting the policy information for the first terminal and the second terminal to perform DualSteer, and the fifth network element is configured to perform policy management of the first terminal; and
receiving the DualSteer policy information from the fifth network element.

28. The method according to any one of claims 23 to 27, wherein the method further comprises:
determining, based on the first information, that the first terminal is allowed to establish a DualSteer session.

29. The method according to any one of claims 23 to 28, wherein the first message further comprises first indication information, the first indication information is for requesting the first terminal and the second terminal to perform DualSteer, the third message further comprises second indication information, and the first indication information is for requesting the first terminal and the second terminal to perform DualSteer.

30. A communication method, applied to a first network element, wherein the method comprises:
receiving a first message from a first terminal, wherein the first message comprises a DualSteer identifier; the DualSteer identifier is generated by the first terminal or a second terminal, or the DualSteer identifier is generated by a third network element; the third network element is configured to manage data information of the second terminal; the DualSteer identifier is related to the second terminal; and the first message is for requesting the first terminal and the second terminal to perform DualSteer;
sending a third message, wherein the third message comprises a second identity of the first terminal and the DualSteer identifier; and
receiving first information, wherein the first information indicates that the first terminal and the second terminal are allowed to perform DualSteer.

31. The method according to claim 30, wherein that the first message comprises the DualSteer identifier comprises:
the first message comprises a DualSteer request container, and the DualSteer request container comprises the DualSteer identifier.

32. The method according to claim 30 or 31, wherein the method further comprises:
storing the first information.

33. The method according to any one of claims 30 to 32, wherein the method further comprises:
obtaining DualSteer policy information based on the first information; and
sending the DualSteer policy information to the first terminal.

34. The method according to claim 33, wherein obtaining the DualSteer policy information comprises:
sending a policy request message to a fifth network element, wherein the policy request message comprises third indication information, the third indication information is for requesting the policy information for the first terminal and the second terminal to perform DualSteer, and the fifth network element is configured to perform policy management of the first terminal; and
receiving the DualSteer policy information from the fifth network element.

35. The method according to any one of claims 30 to 34, wherein the method further comprises:
determining, based on the first information, that the first terminal is allowed to establish a DualSteer session.

36. The method according to any one of claims 30 to 35, wherein the first message further comprises first indication information, the first indication information is for requesting the first terminal and the second terminal to perform DualSteer, the third message further comprises second indication information, and the first indication information is for requesting the first terminal and the second terminal to perform DualSteer.

37. A communication apparatus, comprising a functional module configured to implement the method according to any one of claims 1 to 36.

38. A communication apparatus, comprising at least one processor and a memory, wherein
the memory is configured to store a computer program or instructions; and
the at least one processor is configured to execute the computer program or instructions, so that the method according to any one of claims 1 to 36 is performed.

39. A chip system, wherein the chip system comprises a processing circuit, and the processing circuit is coupled to a storage medium; and
the processing circuit is configured to: execute a part or all of the computer program or instructions in the storage medium, and implement the method according to any one of claims 1 to 36 when the part or all of the computer program or instructions are executed.

40. A computer-readable storage medium, wherein the computer-readable storage medium stores instructions, and when the instructions are executed by a computer, the method according to any one of claims 1 to 36 is performed.

41. A computer program product comprising a computer program or instructions, wherein when the computer program or instructions are run on a computer, the method according to any one of claims 1 to 36 is performed.
